# EUROPEAN PATENT APPLICATION

(11) **EP 2 911 270 A1**
(43) Date of publication of application: **26.08.2015**
(21) Application number: 15156514.0
(22) Date of filing: 25.02.2015
(51) Int. Cl.: H02J 7/02, H02J 5/00, H04B 5/00, H04W 52/44

(54) **Power transfer unit and power transfer method**

(30) Priority: 25.02.2014 JP 2014034571; 10.02.2015 JP 2015023806
(71) Applicant: Funai Electric Co., Ltd., Daito-shi, Osaka 574-0013 (JP)
(72) Inventor: Nakase, Takafumi, Daito-shi, Osaka 574-0013 (JP)
(74) Representative: Grünecker Patent- und Rechtsanwälte PartG mbB

(57) **Abstract**

A power transfer unit (20, 120, 220, 320, 420) includes a power source (24), a wireless communication portion (29, 129, 229), and a controller (30, 130, 230, 330) specifying the external device to which power is to be transferred, based on the state of the wireless communication portion according to change in the state of power transfer from the power source.

## Description

### BACKGROUND OF THE INVENTION

### Field of the Invention

The present invention relates to a power transfer unit and a power transfer method, and more particularly, it relates to a power transfer unit and a power transfer method each including a communication portion wirelessly communicating with an electronic device.

### Description of the Background Art

A power transfer unit including a communication portion wirelessly communicating with an electronic device is known in general, as disclosed in Japanese Patent Laying-Open No. 2012-065472, for example.

Japanese Patent Laying-Open No. 2012-065472 discloses a charger (power transfer unit) including a communication portion that communicates in a noncontact manner (wirelessly) with an electronic device and a power transfer portion transferring (feeding) power to the electronic device in a noncontact manner. This charger conceivably acquires electronic device information of the electronic device through the communication portion and adjusts power transferred from the power transfer portion on the basis of the acquired electronic device information to transfer the power.

In the charger (a first charger) according to Japanese Patent Laying-Open No. 2012-065472, however, a first electronic device arranged in the first charger for charging may communicate with a second charger, and a second electronic device arranged in the second charger for charging may communicate with the first charger in the case where the first charger and the second charger are arranged in a range where noncontact communication is enabled. In this case, the first charger and the second charger each acquire electronic device information of the electronic device different from the electronic device arranged therein for charging and adjust transferred power on the basis of the electronic device information of the electronic device different from the electronic device arranged therein for charging, and hence power cannot be properly transferred to the electronic devices arranged therein for charging.

### SUMMARY OF THE INVENTION

The present invention has been proposed in order to solve the aforementioned problem, and an object of the present invention is to provide a power transfer unit and a power transfer method each capable of properly transferring power to an electronic device (external device) even in the case where a first power transfer unit and a second power transfer unit are arranged in a range where wireless communication is enabled.

In order to attain the aforementioned object, a power transfer unit according to a first aspect of the present invention includes a power source, a wireless communication portion, and a controller specifying the external device to which power is to be transferred, based on the state of the wireless communication portion according to change in the state of power transfer from the power source.

The power transfer unit according to the first aspect of the present invention is provided with the controller having the aforementioned structure, whereby the external device to which power is to be transferred can be specified. Consequently, power can be properly transferred to the external device even in the case where a first power transfer unit and a second power transfer unit are arranged in a range where wireless communication is enabled.

In the aforementioned power transfer unit according to the first aspect, the change in the state of power transfer is preferably change from the state of transferring power from the power source to the state of stopping power transfer from the power source. According to this structure, utilizing the fact that the communication with the external device is lost by stopping the power transfer from the power source to the external device in the state of stopping power transfer in the case where the external device with which the power transfer unit has communicated through the wireless communication portion corresponds to the external device to which the power source has transferred power and the communication with the external device is not lost (continues) by power transfer from a power source of another power transfer unit even in the state of stopping power transfer in the case where the external device with which the power transfer unit has communicated through the wireless communication portion does not correspond to the external device to which the power source has transferred power when the state of transferring power is changed to the state of stopping power transfer, the power transfer unit can easily specify the external device to which power is to be transferred.

In the aforementioned structure in which the change in the state of power transfer is the change from the state of transferring power to the state of stopping power transfer, the controller preferably identifies the external device that has lost wireless communication as the external device to which power is to be transferred and restarts power transfer. According to this structure, power can be properly transferred to the external device identified as the external device to which power is to be transferred.

In the aforementioned structure in which the change in the state of power transfer is the change from the state of transferring power to the state of stopping power transfer, the controller preferably does not restart power transfer to the external device that has not lost wireless communication. According to this structure, improper power transfer to the external device not identified as the external device to which power is to be transferred can be suppressed.

In the aforementioned structure of identifying the external device that has lost wireless communication as the external device to which power is to be transferred, the controller preferably does not restart power transfer in the case where the external device with which the power transfer unit has wirelessly communicated through the wireless communication portion is different from the external device to which the power source has stopped transferring power when the power source has stopped power transfer. According to this structure, in the case where the external device with which the power transfer unit has wirelessly communicated through the wireless communication portion is different from the external device to which the power source has stopped transferring power, improper power transfer can be reliably suppressed.

The aforementioned power transfer unit according to the first aspect preferably further includes an identification information acquisition portion acquiring identification information of the external device with which the power transfer unit wirelessly communicates through the wireless communication portion, and the controller preferably specifies the external device to which power is to be transferred, based on the identification information. According to this structure, the external device to which power is to be transferred can be reliably specified, based on the acquired identification information.

In this case, the controller preferably continues power transfer in the case where the identification information of the external device acquired when power transfer from the power source is restarted and the identification information of the external device to which power is to be transferred that has been specified agree with each other and stops power transfer in the case where the same do not agree with each other. According to this structure, in the case where the identification information of the external device acquired when the power transfer from the power source is restarted and the identification information of the external device to which power is to be transferred that has been specified agree with each other, the controller continues the power transfer, whereby power can be more reliably properly transferred to the external device. In the case where the same do not agree with each other, on the other hand, the controller stops the power transfer, whereby improper power transfer to the external device can be more reliably suppressed.

In the aforementioned power transfer unit according to the first aspect, the controller preferably stops power transfer within a prescribed time period from start of power transfer to the external device. According to this structure, the external device to which power is to be transferred can be easily specified within the prescribed time period from the start of power transfer.

In the aforementioned power transfer unit according to the first aspect, the controller preferably stops power transfer at prescribed timing from restart of power transfer and specifies the external device to which power is to be transferred a plurality of times. According to this structure, the external device to which power is to be transferred can be specified again even in the case where an external device is added during power transfer.

The aforementioned power transfer unit according to the first aspect preferably further includes a notification portion notifying a user of information indicating a control process of the controller. According to this structure, the user can easily recognize the control process of the controller.

In the aforementioned power transfer unit according to the first aspect, the change in the state of power transfer is preferably change from the state of stopping power transfer from the power source to the state of restarting power transfer from the power source. According to this structure, utilizing the fact that the communication with the external device is restarted by restarting the power transfer from the power source to the external device in the state of restarting power transfer in the case where the external device with which the power transfer unit has communicated through the wireless communication portion corresponds to the external device to which the power source has transferred power and the communication with the external device is not restarted by power transfer from a power source of another power transfer unit even in the state of restarting power transfer in the case where the external device with which the power transfer unit has communicated through the wireless communication portion does not correspond to the external device to which the power source has transferred power when the state of stopping power transfer is changed to the state of restarting power transfer, the power transfer unit can easily specify the external device to which power is to be transferred.

In the aforementioned structure in which the change in the state of power transfer is the change from the state of stopping power transfer to the state of restarting power transfer, the controller preferably identifies the external device that has sent initial information of wireless communication as the external device to which power is to be transferred and restarting power transfer. According to this structure, power can be properly transferred to the external device identified as the external device to which power is to be transferred.

In the aforementioned structure in which the change in the state of power transfer is the change from the state of stopping power transfer to the state of restarting power transfer, the controller preferably does not restart power transfer to the external device that has not sent initial information of wireless communication. According to this structure, improper power transfer to the external device not identified as the external device to which power is to be transferred can be suppressed.

In the aforementioned power transfer unit according to the first aspect, the external device preferably includes an external device including a power receiving portion receiving power from the power source and a power sending portion sending the power received by the power receiving portion to another external device. According to this structure, power can be sent also to another external device including no power receiving portion.

A power transfer method according to a second aspect of the present invention includes steps of transferring power from a power source to an external device, wirelessly communicating with the external device through a wireless communication portion, and specifying the external device to which power is to be transferred by a controller, based on the state of the wireless communication portion according to change in the state of power transfer from the power source.

The power transfer method according to the second aspect of the present invention is provided with the aforementioned steps, whereby the power transfer method capable of properly transferring power to the external device even in the case where a first power transfer unit and a second power transfer unit are arranged similarly to the power transfer unit according to the first aspect can be provided.

As to the aforementioned power transfer unit according to the first aspect, the following structure may also be conceivable.

In other words, the aforementioned power transfer unit according to the first aspect includes a power source transferring power to an external device, a wireless communication portion wirelessly communicating with the external device, and a controller performing control of specifying the external device to which power is to be transferred, based on the state of wireless communication from the wireless communication portion according to change in the state of power transfer from the power source.

Also, in the aforementioned structure of identifying the external device that has sent the initial information of wireless communication as the external device to which power is to be transferred, the controller preferably stops restarted power transfer in the case where the external device with which the power transfer unit has wirelessly communicated through the wireless communication portion is different from the external device to which the power source has restarted to transfer power when the power source has restarted power transfer. According to this structure, in the case where the external device with which the power transfer unit has wirelessly communicated through the wireless communication portion is different from the external device to which the power source has restarted to transfer power, improper power transfer can be reliably suppressed.

As to the aforementioned power transfer unit according to the second aspect, the following structure may also be conceivable.

In other words, in the aforementioned power transfer method according to the second aspect, the step of specifying the external device to which power is to be transferred preferably includes a step of identifying the external device that has lost wireless communication as the external device to which power is to be transferred and restarting power transfer in the case where the change in the state of power transfer is change from the state of transferring power from the power source to the state of stopping power transfer from the power source. According to this structure, utilizing the fact that the communication with the external device is lost by stopping the power transfer from the power source to the external device in the state of stopping power transfer in the case where the external device with which a power transfer unit has communicated through the wireless communication portion corresponds to the external device to which the power source has transferred power and the communication with the external device is not lost (continues) by power transfer from a power source of another power transfer unit even in the state of stopping power transfer in the case where the external device with which the power transfer unit has communicated through the wireless communication portion does not correspond to the external device to which the power source has transferred power when the state of transferring power is changed to the state of stopping power transfer, the power transfer unit can easily specify the external device to which power is to be transferred. Furthermore, power can be properly transferred to the external device identified as the external device to which power is to be transferred.

In this case, the step of specifying the external device to which power is to be transferred preferably further includes a step of not restarting power transfer to the external device that has not lost wireless communication. According to this structure, improper power transfer to the external device not identified as the external device to which power is to be transferred can be suppressed.

In the aforementioned power transfer method according to the second aspect, the step of specifying the external device to which power is to be transferred preferably includes a step of identifying the external device that has sent initial information of wireless communication as the external device to which power is to be transferred and restarting power transfer in the case where the change in the state of power transfer is change from the state of stopping power transfer from the power source to the state of restarting power transfer from the power source. According to this structure, utilizing the fact that the communication with the external device is restarted by restarting the power transfer from the power source to the external device in the state of restarting power transfer in the case where the external device with which the power transfer unit has communicated through the wireless communication portion corresponds to the external device to which the power source has transferred power and the communication with the external device is not restarted by power transfer from a power source of another power transfer unit even in the state of restarting power transfer in the case where the external device with which the power transfer unit has communicated through the wireless communication portion does not correspond to the external device to which the power source has transferred power when the state of stopping power transfer is changed to the state of restarting power transfer, the power transfer unit can easily specify the external device to which power is to be transferred. Furthermore, power can be properly transferred to the external device identified as the external device to which power is to be transferred.

In this case, the step of specifying the external device to which power is to be transferred preferably further includes a step of not restarting power transfer to the external device that has not sent initial information of wireless communication. According to this structure, improper power transfer to the external device not identified as the external device to which power is to be transferred can be suppressed.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a block diagram showing the overall structure of a noncontact power transfer system according to a first embodiment of the present invention;
Fig. 2 illustrates an example of notification to a user in a power transfer unit according to the first embodiment of the present invention;
Fig. 3 is a sequence diagram for illustrating power feeding processing in the case where a receiver with which the power transfer unit has communicated corresponds to a receiver to which the power transfer unit has fed power in the noncontact power transfer system according to the first embodiment of the present invention;
Fig. 4 is a flowchart for illustrating power feeding processing performed by the power transfer unit according to the first embodiment of the present invention;
Fig. 5 is a flowchart showing a continuation of the power feeding processing in Fig. 4;
Fig. 6 is a flowchart for illustrating power receiving processing performed by the receiver according to the first embodiment of the present invention;
Fig. 7 is a flowchart for illustrating power feeding processing performed by a power transfer unit according to a second embodiment of the present invention;
Fig. 8 is a flowchart showing a continuation of the power feeding processing in Fig. 7;
Fig. 9 is a block diagram showing the overall structure of a noncontact power transfer system according to a third embodiment of the present invention;
Fig. 10 is a sequence diagram for illustrating power feeding processing in the case where a receiver with which a power transfer unit has communicated corresponds to a receiver to which the power transfer unit has fed power in the noncontact power transfer system according to the third embodiment of the present invention;
Fig. 11 is a flowchart for illustrating power feeding processing performed by a power transfer unit according to the third embodiment of the present invention;
Fig. 12 is a flowchart showing a continuation of the power feeding processing in Fig. 11;
Fig. 13 is a flowchart for illustrating power receiving processing of the receiver according to the third embodiment of the present invention;
Fig. 14 is a flowchart for illustrating power feeding processing of a power transfer unit according to a fourth embodiment of the present invention;
Fig. 15 is a flowchart showing a continuation of the power feeding processing in Fig. 14; and
Fig. 16 is a block diagram showing the overall structure of a noncontact power transfer system according to a fifth embodiment of the present invention.

### DESCRIPTION OF THE PREFERRED EMBODIMENTS

Embodiments of the present invention are now described with reference to the drawings.

### (First Embodiment)

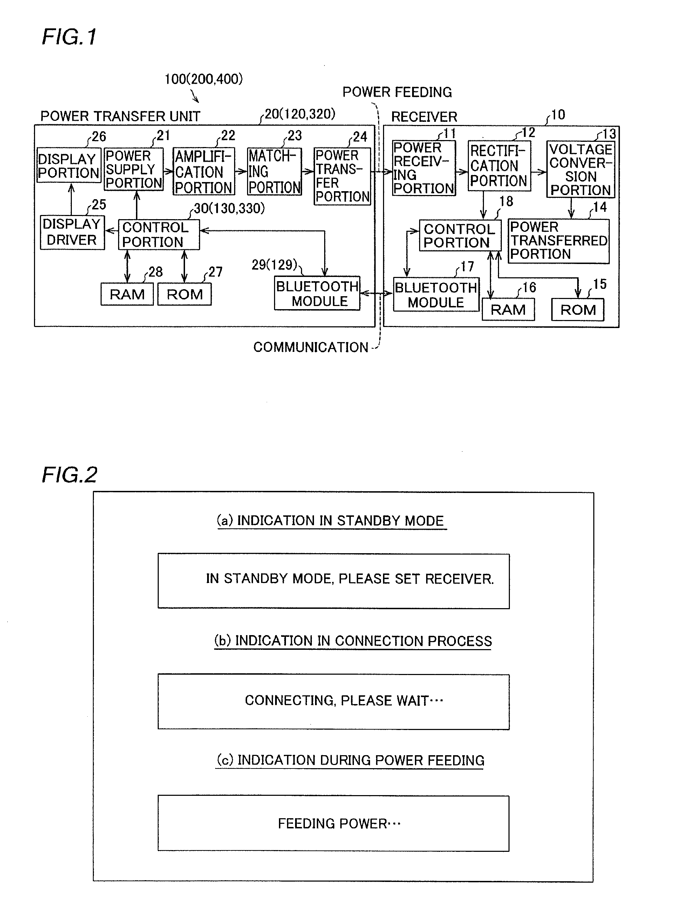

The structure of a noncontact power transfer system 100 according to a first embodiment of the present invention is described with reference to Figs. 1 and 2.

The noncontact power transfer system 100 according to the first embodiment of the present invention includes a receiver 10 and a power transfer unit 20 feeding (transferring) power to the receiver 10, as shown in Fig. 1. In this noncontact power transfer system 100, power is fed (transferred) from the power transfer unit 20 to the receiver 10 in a noncontact manner by a magnetic field resonance method, and the receiver 10 and the power transfer unit 20 wirelessly communicate with (are connected to) each other on the basis of the Bluetooth (registered trademark) standards. Furthermore, in the noncontact power transfer system 100, the power transfer unit 20 acquires received voltage information of the receiver 10 by wireless communication and controls fed power (transferred power) on the basis of the acquired received voltage information. In this noncontact power transfer system 100, any electronic device may be employed as the receiver 10 so far as the same allows noncontact power feeding. As an example of the receiver 10, an electronic device such as a notebook computer or a power-assisted cart is employed, for example. The receiver 10 is an example of the "external device" in the present invention.

In the case where a first noncontact power transfer system including a receiver and a power transfer unit and a second noncontact power transfer system including a receiver and a power transfer unit different from the first noncontact power transfer system are arranged in a range where wireless communication based on the Bluetooth standards is enabled, the receiver of the first noncontact power transfer system may communicate with the power transfer unit of the second noncontact power transfer system, and the receiver of the second noncontact power transfer system may communicate with the power transfer unit of the first noncontact power transfer system. In this case, the power transfer unit of the first noncontact power transfer system (second noncontact power transfer system) acquires received voltage information of the receiver of the second noncontact power transfer system (first noncontact power transfer system), and hence power cannot be properly fed to the receiver.

In the noncontact power transfer system 100 according to the first embodiment, the power transfer unit 20 determines whether or not communication with the receiver 10 is lost when changing the state of power feeding from the power feeding state of feeding power to the receiver 10 to the non-power feeding state of feeding no power to the receiver 10 and determining whether or not a receiver with which the power transfer unit 20 has communicated corresponds to the receiver 10 to which the power transfer unit 20 has fed power. When determining that the receiver with which the power transfer unit 20 has communicated corresponds to the receiver 10 to which the power transfer unit 20 has fed power, the power transfer unit 20 performs control of restarting power feeding to the receiver 10. Thus, the power transfer unit 20 can properly feed power to the receiver 10. Power feeding (power transfer) processing including this correspondence determination is described in detail after components of the receiver 10 and the power transfer unit 20 are described.

The receiver 10 includes a power receiving portion 11, a rectification portion 12, a voltage conversion portion 13, a power transferred portion 14, a ROM 15, a RAM 16, a Bluetooth module 17, and a controller 18.

The power receiving portion 11 includes a resonance coil resonating at a prescribed resonance frequency. In the power receiving portion 11, the resonance coil resonates by a magnetic field resonance method to generate an AC voltage (receive power). The power receiving portion 11 outputs the generated AC voltage to the rectification portion 12.

The rectification portion 12 rectifies the AC voltage generated in the power receiving portion 11 to a direct voltage. The rectification portion 12 outputs the rectified direct voltage to the voltage conversion portion 13 and outputs the rectified direct voltage as the received voltage information to the controller 18.

The voltage conversion portion 13 converts the direct voltage input from the rectification portion 12 into a prescribed direct voltage value to feed power to the power transferred portion 14. The voltage conversion portion 13 feeds power to the power transferred portion 14 with the direct voltage that has converted into the prescribed direct voltage value.

The power transferred portion 14 includes a secondary battery and is charged by power feeding from the voltage conversion portion 13. The power transferred portion 14 supplies power to each component of the receiver 10 in an on-state where an unshown power switch of the receiver 10 turns on a power source. The power transferred portion 14 supplies power to each component of the receiver 10 also in an off-state where the unshown power switch turns off the power source when the power receiving portion 11 receivers power.

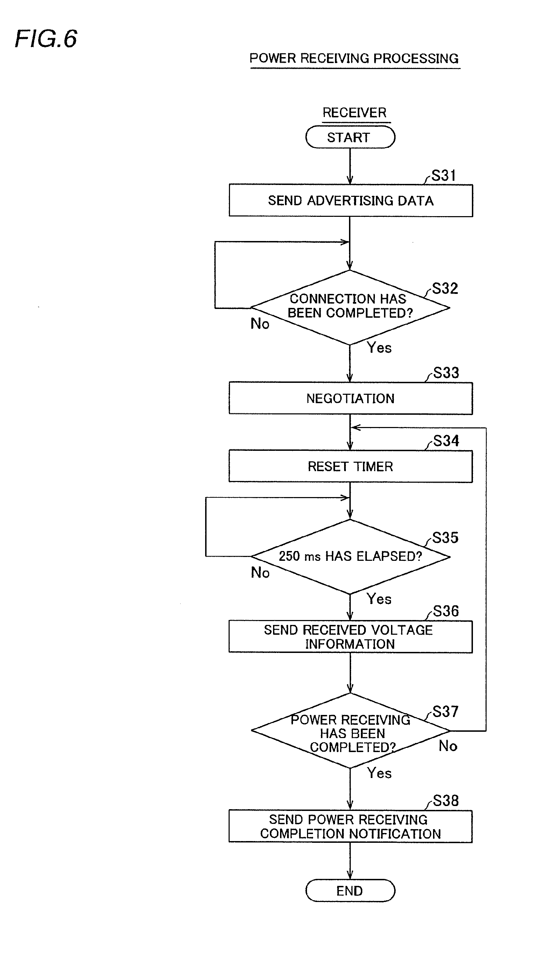

The ROM 15 is a non-volatile memory including a rewritable flash ROM. The ROM 15 stores various types of data employed by the controller 18. More specifically, the ROM 15 stores a program or the like corresponding to power receiving processing (see Fig. 6) described later. The RAM 16 is a volatile memory. The RAM 16 is utilized as a work area when the data stored in the ROM 15 is employed by the controller 18. More specifically, the RAM 16 is utilized as the work area when the controller 18 runs the program corresponding to the power receiving processing.

The Bluetooth module 17 can perform wireless communication on the basis of the Bluetooth standards. The receiver 10 wirelessly communicates with a power transfer unit (a power transfer unit including the power transfer unit 20) through the Bluetooth module 17. The Bluetooth module 17 has a BD address as unique identification information. The BD address is an example of the "identification information" in the present invention.

The controller 18 controls each component of the receiver 10. More specifically, the controller 18 controls each component to perform control related to the power receiving processing (see Fig. 6) for receiving power from the power transfer unit 20. The controller 18 performs control of acquiring the received voltage information from the rectification portion 12 and sending the acquired received voltage information to the power transfer unit 20 through the Bluetooth module 17.

The power transfer unit 20 includes a power supply portion 21, an amplification portion 22, a matching portion 23, a power transfer portion 24, a display driver 25, a display portion 26, a ROM 27, a RAM 28, a Bluetooth module 29, and a controller 30. The power transfer portion 24 is an example of the "power source" in the present invention. The display portion 26 is an example of the "notification portion" in the present invention. The ROM 27 is an example of the "identification information acquisition portion" in the present invention. The Bluetooth module 29 is an example of the "wireless communication portion" in the present invention.

The power supply portion 21 is supplied with power from an unshown commercial power supply and outputs AC power having a prescribed frequency corresponding to the resonance frequency of the power transfer portion 24 described later to the amplification portion 22. The amplification portion 22 amplifies the input AC power and outputs the amplified AC power to the power transfer portion 24 through the matching portion 23.

The matching portion 23 matches an impedance on the side of the power supply portion 21 with an impedance on the side of the power transfer portion 24. Thus, the matching portion 23 suppresses a reduction in the efficiency of power transfer resulting from impedance mismatching.

The power transfer portion 24 includes a resonance coil resonating at the same resonance frequency as the prescribed resonance frequency of the power receiving portion 11 of the receiver 10. Noncontact power transfer from the power transfer portion 24 to the power receiving portion 11 performed by the magnetic field resonance method is now described.

When the AC power having the prescribed frequency flows into the power transfer portion 24, the resonance coil oscillates at the prescribed resonance frequency. Thus, a magnetic field oscillating at the prescribed resonance frequency is generated in the vicinity of the resonance coil of the power transfer portion 24. In the power receiving portion 11 arranged in a space where the magnetic field oscillating at the prescribed resonance frequency is formed by the resonance coil of the power transfer portion 24, the resonance frequencies coincide with each other so that the resonance coil of the power receiving portion 11 oscillates at the prescribed resonance frequency. Thus, the resonance coil of the power transfer portion 24 and the resonance coil of the power receiving portion 11 resonate at the same prescribed resonance frequency. Consequently, the AC voltage is generated in the power receiving portion 11, and the noncontact power transfer from the power transfer portion 24 to the power receiving portion 11 is performed.

The display driver 25 controls display of the display portion 26 on the basis of control of the controller 30. The display portion 26 displays an indication for notifying a user of the state of power feeding on the basis of the control of the display driver 25. The indication for notifying the user of the state of power feeding includes "indication in standby mode" indicating that no power is being fed from the power transfer unit 20 to the receiver 10, "indication in connection process" indicating that the connection between the power transfer unit 20 and the receiver 10 is in process, and "indication during power feeding" indicating that power is being fed from the power transfer unit 20 to the receiver 10, etc., as shown in Fig. 2. In other words, the display portion 26 notifies the user of information indicating the control process of the controller 30. Another indication may be displayed on the display portion 26. The display portion 26 is an example of the "notification portion" in the present invention.

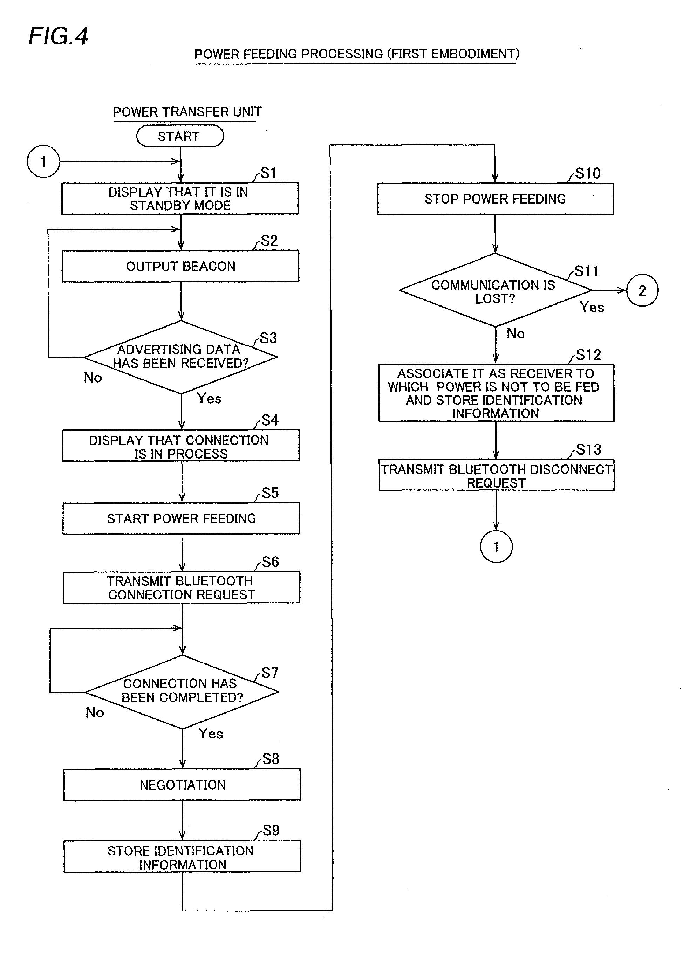

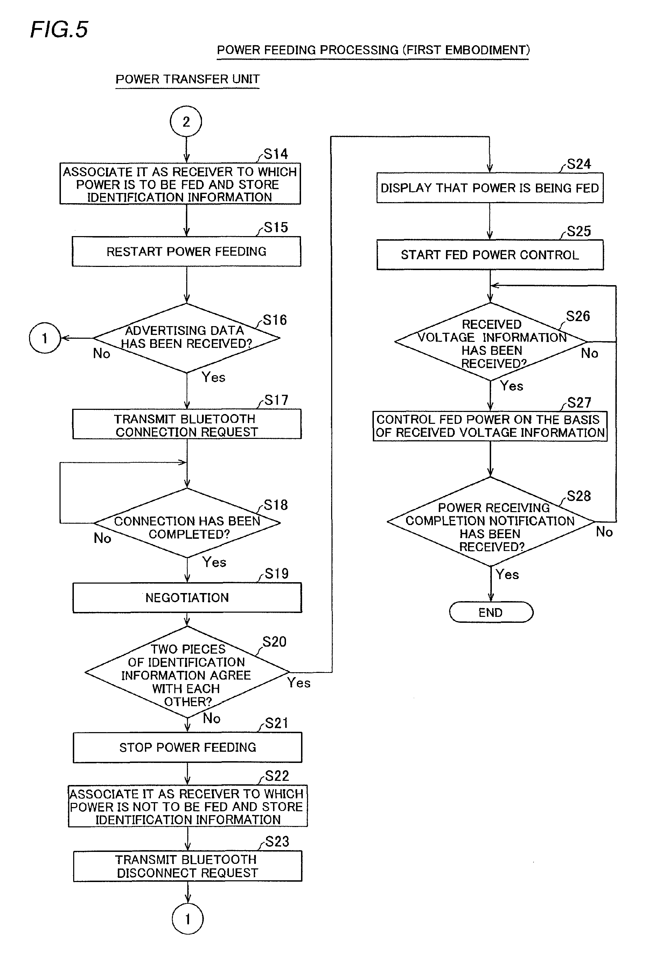

The ROM 27 is a non-volatile memory including a rewritable flash ROM. The ROM 27 stores various types of data employed by the controller 30. More specifically, the ROM 27 stores a program corresponding to power feeding processing (see Figs. 4 and 5) described later and the identification information (BD address) acquired from the receiver 10. The ROM 27 is an example of the "identification information acquisition portion" in the present invention.

The RAM 28 is a volatile memory. The RAM 28 is utilized as a work area when the data stored in the ROM 27 is employed by the controller 30. More specifically, the RAM 28 is utilized as the work area when the controller 30 runs the program corresponding to the power feeding processing.

The Bluetooth module 29 can perform wireless communication on the basis of the Bluetooth standards. The power transfer unit 20 can wirelessly communicate with only one receiver (a receiver including the receiver 10) at a time through the Bluetooth module 29.

The controller 30 controls each component of the power transfer unit 20. More specifically, the controller 30 controls each component to perform control related to the power feeding processing for feeding power to the receiver 10.

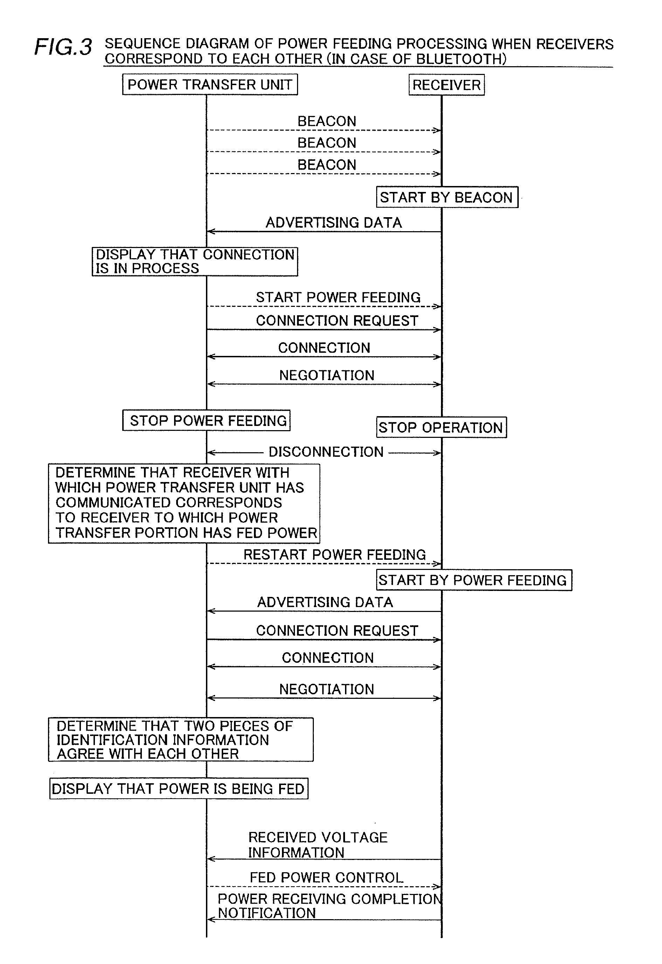

The control related to the power receiving processing of the receiver 10 and the control related to the power feeding processing of the power transfer unit 20 are now described with reference to Fig. 3.

The controller 30 (see Fig. 1) of the power transfer unit 20 (see Fig. 1) performs control of periodically outputting a beacon (power feeding for a short time) from the power transfer portion 24 (see Fig. 1) in a standby mode before feeding power to the receiver 10 (see Fig. 1), as shown in Fig. 3. The controller 30 performs control of displaying "indication in standby mode" (see Fig. 2) on the display portion 26 (see Fig. 1) in this standby mode.

The receiver 10 is started by power supply from the power transferred portion 14 (see Fig. 1) to each component when power is fed to the power receiving portion 11 (see Fig. 1) by the beacon. The controller 18 (see Fig. 1) of the receiver 10 sends advertising data to the power transfer unit 20 through the Bluetooth module 17 (see Fig. 1) when the receiver 10 is started by the beacon.

The controller 30 of the power transfer unit 20 performs control of displaying "indication in connection process" on the display portion 26 when receiving the advertising data. The controller 30 starts power feeding from the power transfer portion 24 to the receiver 10 and transmits a connection request based on the Bluetooth standards to the receiver 10 through the Bluetooth module 29 (see Fig. 1) when receiving the advertising data. Thus, the receiver 10 and the power transfer unit 20 are connected to each other on the basis of the Bluetooth standards through the Bluetooth module 17 and the Bluetooth module 29.

The controller 18 of the receiver 10 and the controller 30 of the power transfer unit 20 make an exchange (negotiation) of information based on prescribed standards related to noncontact power feeding such as the A4WP. Thus, the controller 30 of the power transfer unit 20 can determine whether or not a device that has sent the advertising data is a device enabling noncontact power feeding. The controller 30 of the power transfer unit 20 acquires the identification information (BD address) of the Bluetooth module 17 of the receiver 10 during the negotiation.

According to the first embodiment, the controller 30 of the power transfer unit 20 changes the state of power feeding from the power feeding state of feeding power from the power transfer portion 24 to the receiver 10 (the state of feeding power from the power transfer portion 24) to the non-power feeding state of feeding no power from the power transfer portion 24 to the receiver 10 (the state of stopping power feeding from the power transfer portion 24) after feeding power to the receiver 10 and being connected to the receiver 10. The controller 30 determines whether or not the communication (connection) with the receiver 10 is lost when changing the state of power feeding from the power feeding state to the non-power feeding state and determining whether or not the receiver with which the power transfer unit 20 has communicated through the Bluetooth module 29 corresponds to the receiver 10 to which the power transfer portion 24 has fed power. In other words, the controller 30 performs control of specifying the receiver 10 to which power is to be fed on the basis of the state of wireless communication from the Bluetooth module 29 based on the change in the state of power feeding from the power transfer portion 24.

The receiver 10 is started by power supply to each component of the receiver 10 in the power feeding state of the power transfer unit 20. Consequently, communication through the Bluetooth module 17 is enabled. On the other hands, the receiver 10 is stopped by no power feeding to each component of the receiver 10 in the non-power feeding state of the power transfer unit 20. Consequently, communication through the Bluetooth module 17 is disabled.

Therefore, according to the first embodiment, the controller 30 of the power transfer unit 20 performs control of determining that the receiver 10 with which the power transfer unit 20 has communicated through the Bluetooth module 29 corresponds to the receiver 10 to which the power transfer portion 24 has fed power when the communication (connection) with the receiver 10 is lost (the case shown in Fig. 3) in the case where the controller 30 changes the state of power feeding from the power feeding state to the non-power feeding state. The controller 30 performs control of determining that the receiver with the power transfer unit 20 has communicated through the Bluetooth module 29 does not correspond to the receiver 10 to which the power transfer portion 24 has fed power when the communication (connection) with the receiver is not lost (continues) (when the power transfer unit 20 has communicated with a receiver different from the receiver 10) in the case where the controller 30 changes the state of power feeding from the power feeding state to the non-power feeding state.

In the case where there are a plurality of power transfer units performing a correspondence determination, the timing of changing the state of power feeding from the power feeding state to the non-power feeding state is preferably different in each of the plurality of power transfer units. According to this structure, the timing of changing the state of power feeding from the power feeding state to the non-power feeding state is different, whereby the plurality of power transfer units can properly perform the correspondence determination even in the case where the plurality of power transfer units performing the correspondence determination are arranged in a range where wireless communication with each other is enabled.

The controller 30 of the power transfer unit 20 performs control of restarting the power feeding from the power transfer portion 24 to the receiver 10 when determining that the receiver 10 with the power transfer unit 20 has communicated through the Bluetooth module 29 corresponds to the receiver 10 to which the power transfer portion 24 has fed power. The controller 30 of the power transfer unit 20 performs control of not restarting the power feeding from the power transfer portion 24 to the receiver (the receiver different from the receiver 10) when determining that the receiver with the power transfer unit 20 has communicated through the Bluetooth module 29 does not correspond to the receiver 10 to which the power transfer portion 24 has fed power.

The controller 30 of the power transfer unit 20 performs control of associating the identification information (BD address) of the receiver 10 acquired during the negotiation with the result of the correspondence determination and storing the associated identification information in the ROM 27. Specifically, the controller 30 associates the receiver 10 with which the power transfer unit 20 has communicated as the receiver to which power is to be fed when determining that the receiver 10 with the power transfer unit 20 has communicated through the Bluetooth module 29 corresponds to the receiver 10 to which the power transfer portion 24 has fed power and associates the receiver 10 with which the power transfer unit 20 has communicated as a receiver to which power is not to be fed when determining that the receiver with the power transfer unit 20 has communicated through the Bluetooth module 29 does not correspond to the receiver 10 to which the power transfer portion 24 has fed power, and stores the identification information of the receiver 10 in the ROM 27.

In Fig. 3, the controller 30 of the power transfer unit 20 determines that the receiver 10 with the power transfer unit 20 has communicated through the Bluetooth module 29 corresponds to the receiver 10 to which the power transfer portion 24 has fed power, and hence the controller 30 of the power transfer unit 20 performs control of restarting the power feeding from the power transfer portion 24 to the receiver 10. Thus, the receiver 10 is restarted by power supply from the power transferred portion 14 to each component when power is fed from the power transfer portion 24 to the power receiving portion 11. Thereafter, the receiver 10 sends the advertising data to the power transfer unit 20, and the power transfer unit 20 transmits a connection request to the receiver 10. The receiver 10 and the power transfer unit 20 are connected to each other through the Bluetooth module 17 and the Bluetooth module 29 on the basis of the Bluetooth standards and make a negotiation with each other.

The controller 30 of the power transfer unit 20 acquires the identification information (BD address) of the receiver 10 through the Bluetooth module 29 during the negotiation also when the power feeding from the power transfer portion 24 to the receiver 10 is restarted.

The controller 30 of the power transfer unit 20 performs control of determining whether or not the identification information (BD address) of the receiver 10 determined to correspond to the receiver 10 to which the power transfer portion 24 has fed power and the identification information (BD address) of the receiver acquired during the negotiation when the power feeding from the power transfer portion 24 is restarted agree with each other. The controller 30 performs control of continuing the restarted power feeding from the power transfer portion 24 to the receiver 10 when determining that the two pieces of identification information agree with each other. When the controller 30 determines that the two pieces of identification information do not agree with each other, the receiver 10 has conceivably been replaced by another receiver on which the correspondence determination has not been performed, and hence the controller 30 performs control of stopping the restarted power feeding from the power transfer portion 24 to another receiver, associates the identification information acquired during the negotiation when the power feeding from the power transfer portion 24 to another receiver is restarted with the receiver to which power is not to be fed, and stores the identification information of another receiver in the ROM 27.

The controller 30 of the power transfer unit 20 performs control of displaying "indication during power feeding" (see Fig. 2) on the display portion 26 when determining that the two pieces of identification information agree with each other, as shown in Fig. 3.

The controller 18 of the receiver 10 performs control of sending the received voltage information of the power receiving portion 11 to the power transfer unit 20 at the prescribed timing (every 250 ms (milliseconds)). The controller 18 performs control of sending a power receiving completion notification to the power transfer unit 20 when the power transferred portion 14 is fully charged.

The controller 30 of the power transfer unit 20 acquires the received voltage information of the receiver 10 through the Bluetooth module 29 and controls fed power on the basis of the acquired received voltage information. The controller 30 terminates the power feeding processing when receiving the power receiving completion notification from the receiver 10.

The power feeding processing of the power transfer unit 20 is now described on the basis of a flowchart with reference to Figs. 4 and 5. Then, the power receiving processing of the receiver 10 is described on the basis of a flowchart with reference to Fig. 6.

As shown in Fig. 4, the controller 30 (see Fig. 1) performs control of displaying "indication in standby mode" (see Fig. 2) on the display portion 26 (see Fig. 1) at a step S1. At a step S2, the controller 30 performs control of periodically outputting the beacon (power feeding for a short time) from the power transfer portion 24 (see Fig. 1).

At a step S3, the controller 30 performs control of determining whether or not the advertising data has been received. When determining that the advertising data has not been received, the controller 30 repeats the output of the beacon at the step S2.

When the controller 30 determines that the advertising data has been received at the step S3, the receiver 10 has conceivably moved closer to receive power (to be charged), and hence the controller 30 performs control of displaying "indication in connection process" (see Fig. 2) on the display portion 26 at a step S4. At a step S5, the controller 30 performs control of starting the power feeding from the power transfer portion 24 to the receiver 10.

At a step S6, the controller 30 performs control of transmitting the connection request based on the Bluetooth standards. At a step S7, the controller 30 performs control of determining whether or not the connection with the receiver 10 has been completed. When determining that the connection with the receiver 10 has not been completed, the controller 30 repeats the processing at the step S7.

When determining that the connection with the receiver 10 has been completed at the step S7, the controller 30 performs control of making an exchange (negotiation) of the information based on the prescribed standards related to noncontact power feeding to the receiver 10 at a step S8. Furthermore, the controller 30 performs control of acquiring the identification information (BD address) of the receiver 10 at the step S8. At a step S9, the controller 30 performs control of storing the identification information acquired during the negotiation in the ROM 27 (see Fig. 1).

At a step S10, the controller 30 performs control of stopping the power feeding from the power transfer portion 24 to the receiver 10 in order to determine whether or not the receiver with which the power transfer unit 20 has communicated corresponds to the receiver 10 to which the power transfer portion 24 has fed power. In other words, the controller 30 performs control of stopping the power feeding within a prescribed time period from the start of the power feeding to the receiver 10.

At a step S11, the controller 30 performs the correspondence determination. Specifically, the controller 30 performs control of determining whether or not the communication (connection) with the receiver 10 is lost at the step S11. When the communication with the receiver 10 is not lost (continues), the power transfer unit 20 has conceivably communicated with the receiver different from the receiver 10 to which the power transfer portion 24 has fed power, and hence the controller 30 performs control of associating the receiver with which the power transfer unit 20 has communicated as the receiver to which power is not to be fed and storing the identification information in the ROM 27 at a step S12. At a step S13, the controller 30 performs control of transmitting a disconnect request of wireless communication based on the Bluetooth standards to the receiver with which the power transfer unit 20 has communicated and returns to the step S1. More specifically, the controller 30 performs control of not restarting power feeding to the receiver with which the power transfer unit 20 continues to wirelessly communicate. In other words, the controller 30 performs control of not restarting power feeding in the case where the receiver with which the power transfer unit 20 has wirelessly communicated through the Bluetooth module 29 is different from the receiver 10 to which the power transfer portion 24 has stopped feeding power when the power transfer portion 24 has stopped power feeding.

When the controller 30 determines that the communication with the receiver is lost at the step S11, the receiver with which the power transfer unit 20 has communicated conceivably corresponds to the receiver 10 to which the power transfer portion 24 has fed power, and hence the controller 30 performs control of associating the receiver with which the power transfer unit 20 has communicated as the receiver to which power is to be fed and storing the identification information (the identification information of the receiver 10) in the ROM 27 at a step S14, as shown in Fig. 5.

At a step S15, the controller 30 performs control of restarting the power feeding from the power transfer portion 24 to the receiver 10. In other words, the controller 30 performs control of identifying the receiver 10 that has lost wireless communication as the receiver 10 to which power is to be fed and restarting the power feeding. At a step S16, the controller 30 performs control of determining whether or not the advertising data has been received again. Specifically, the controller 30 performs control of determining whether or not the advertising data has been received within a prescribed time period from the restart of the power feeding at the step S16. When the controller 30 determines that the advertising data has not been received within the prescribed time period, the user has conceivably removed the receiver 10, and hence the controller 30 stops the power feeding from the power transfer portion 24 and returns to the step S1.

When determining that the advertising data has been received within the prescribed time period at the step S16, the controller 30 performs control of transmitting the connection request based on the Bluetooth standards again at a step S17. At a step S18, the controller 30 performs control of determining whether or not the connection with the receiver 10 has been completed again. When determining that the connection with the receiver 10 has not been completed, the controller 30 repeats the processing at the step S18.

When determining that the connection with the receiver 10 has been completed at the step S18, the controller 30 performs control of making an exchange (negotiation) of the information based on the prescribed standards related to noncontact power feeding to the receiver 10 again at a step S19. Furthermore, the controller 30 performs control of acquiring the identification information (BD address) of the receiver 10 again at the step S19.

At a step S20, the controller 30 performs control of determining whether or not the identification information (the identification information associated at the step S14) of the receiver 10 determined to correspond to the receiver 10 to which the power transfer portion 24 has fed power agrees with the identification information (the identification information acquired at the step S19) of the receiver acquired during the negotiation when the power feeding from the power transfer portion 24 is restarted. In other words, the controller 30 performs control of specifying the receiver 10 to which power is to be fed on the basis of the identification information. When the controller 30 determines that the two pieces of identification information do not agree with each other, the receiver 10 has conceivably been replaced by the receiver on which the correspondence determination has not been performed, and hence the controller 30 performs control of stopping the power feeding from the power transfer portion 24 at a step S21. At a step S22, the controller 30 performs control of associating the receiver whose identification information has been acquired during the negotiation when the power feeding is restarted as the receiver to which power is not to be fed and storing the identification information in the ROM 27. At a step S23, the controller 30 performs control of transmitting the disconnect request of wireless communication based on the Bluetooth standards to the receiver whose identification information has been acquired during the negotiation when the power feeding is restarted and returns to the step S1.

When determining that the two pieces of identification information agree with each other at the step S20, the controller 30 performs control of continuing the power feeding from the power transfer portion 24 to the receiver 10 and displaying "indication during power feeding" (see Fig. 2) on the display portion 26 at a step S24. At a step S25, the controller 30 starts control of power fed from the power transfer portion 24 to the receiver 10.

At a step S26, the controller 30 performs control of determining whether or not the received voltage information has been received from the receiver 10. When determining that the received voltage information has not been received, the controller 30 repeats the processing at the step S26.

When determining that the received voltage information has been received at the step S26, the controller 30 controls fed power on the basis of the received voltage information which has been received at a step S27. At a step S28, the controller 30 performs control of determining whether or not the power receiving completion notification has been received from the receiver 10. When determining that the power receiving completion notification has not been received, the controller 30 returns to the step S26 and repeats the processing for controlling fed power on the basis of the received voltage information.

When determining that the power receiving completion notification has been received at the step S28, the controller 30 terminates the power feeding processing.

The power receiving processing of the receiver 10 is now described on the basis of a flowchart with reference to Fig. 6.

As shown in Fig. 6, the controller 18 performs control of sending the advertising data to the power transfer unit 20 at a step S31 when power is fed from the power transfer portion 24 of the power transfer unit 20. The controller 18 performs control of determining whether or not the connection with the power transfer unit 20 has been completed at a step S32. When determining that the connection with the power transfer unit 20 has not been completed, the controller 18 repeats the processing at the step S32.

When determining that the connection with the power transfer unit 20 has been completed at the step S32, the controller 18 performs control of making an exchange (negotiation) of the information based on the prescribed standards related to noncontact power feeding from the power transfer unit 20 at a step S33.

When the controller 30 determines that the receiver 10 with which the power transfer unit 20 has communicated through the Bluetooth module 29 corresponds to the receiver 10 to which the power transfer portion 24 has fed power and continues the power feeding, the controller 18 performs control of resetting a timer for measuring the prescribed timing (every 250 ms) of sending the received voltage information at a step S34. At a step S35, the controller 18 performs control of determining whether or not the time measured by the timer is 250 ms or more. When determining that 250 ms has not elapsed, the controller 18 repeats the processing at the step S35.

When determining that 250 ms has elapsed at the step S35, the controller 18 sends the received voltage information to the power transfer unit 20 at a step S36. At a step S37, the controller 18 performs control of determining whether or not power receiving has been completed (whether or not the power transferred portion 14 has been fully charged). When determining that power receiving has not been completed, the controller 18 returns to the step S34 and repeats the sending of the received voltage information to the power transfer unit 20.

When determining that power receiving has been completed at the step S37, the controller 18 performs control of sending the power receiving completion notification at a step S38 and terminates the power receiving processing.

According to the first embodiment, the following effects can be obtained.

According to the first embodiment, as hereinabove described, the power transfer unit 20 includes the controller 30 determining whether or not the receiver with which the power transfer unit 20 has communicated through the Bluetooth module 29 corresponds to the receiver 10 to which the power transfer portion 24 has fed power by determining whether or not the communication (connection) with the receiver is lost when changing the state of power feeding from the power feeding state of feeding power from the power transfer portion 24 to the receiver 10 to the non-power feeding state of feeding no power from the power transfer portion 24 to the receiver 10. Thus, utilizing the fact that the communication with the receiver 10 is lost by stopping the power feeding from the power transfer portion 24 to the receiver 10 in the non-power feeding state when the receiver with which the power transfer unit 20 has communicated through the Bluetooth module 29 corresponds to the receiver 10 to which the power transfer portion 24 has fed power and the communication with the receiver is not lost (continues) by power feeding from a power transfer portion of another power transfer unit even in the non-power feeding state when the receiver with which the power transfer unit 20 has communicated through the Bluetooth module 29 does not correspond to the receiver 10 to which the power transfer portion 24 has fed power, the controller 30 can easily determine whether or not the receiver with which the power transfer unit 20 has communicated through the Bluetooth module 29 corresponds to the receiver 10 to which the power transfer portion 24 has fed power. Consequently, even in the case where a first power transfer unit and a second power transfer unit are arranged in a range where wireless communication is enabled, power can be properly fed to the receiver 10 on the basis of the result of the correspondence determination.

According to the first embodiment, as hereinabove described, the controller 30 performs control of restarting the power feeding from the power transfer portion 24 to the receiver 10 when determining that the receiver with which the power transfer unit 20 has communicated through the Bluetooth module 29 corresponds to the receiver 10 to which the power transfer portion 24 has fed power and control of not restarting the power feeding from the power transfer portion 24 to the receiver 10 when determining that the receiver with which the power transfer unit 20 has communicated through the Bluetooth module 29 does not correspond to the receiver 10 to which the power transfer portion 24 has fed power. Thus, the controller 30 can receive proper information (information of the receiver 10 to which power is being fed from the power transfer unit 20) from the receiver 10 by wireless communication when determining that the receiver with which the power transfer unit 20 has communicated through the Bluetooth module 29 corresponds to the receiver 10 to which the power transfer portion 24 has fed power, and hence the controller 30 is configured to perform control of restarting the power feeding from the power transfer portion 24 to the receiver 10, whereby power can be properly fed to the receiver 10 on the basis of the received proper information. The controller 30 is also configured to perform control of not restarting the power feeding when determining that the receiver with which the power transfer unit 20 has communicated through the Bluetooth module 29 does not correspond to the receiver 10 to which the power transfer portion 24 has fed power, whereby improper power feeding to the receiver based on improper information (information of the receiver to which power is not being fed from the power transfer unit 20) in a state where the controller 30 receives the improper information from the receiver by wireless communication can be suppressed.

According to the first embodiment, as hereinabove described, the controller 30 changes the state of power feeding from the power feeding state to the non-power feeding state and performs the correspondence determination when the power transfer portion 24 starts the power feeding to the receiver 10. Thus, the controller 30 can promptly perform the correspondence determination in a state where the controller 30 has received the improper information (the information of the receiver to which power is not being fed from the power transfer unit 20) from the receiver by wireless communication when starting the power feeding, and hence improper power feeding to the receiver based on the improper information can be effectively suppressed.

According to the first embodiment, as hereinabove described, the power transfer unit 20 further includes the ROM 27 that stores the information, and the controller 30 acquires the identification information for identifying the receiver 10 through the Bluetooth module 29 when starting the power feeding from the power transfer portion 24 to the receiver 10 and performs control of associating the acquired identification information with the result of the correspondence determination and storing the associated identification information in the ROM 27. Thus, the controller 30 can refer to the associated identification information stored in the ROM 27, and hence the controller 30 may not perform the correspondence determination a number of times on the receiver 10 on which the controller 30 has already performed the correspondence determination. Therefore, the processing load on the controller 30 can be reduced.

According to the first embodiment, as hereinabove described, the controller 30 performs control of restarting the power feeding from the power transfer portion 24 to the receiver 10 when determining that the receiver with which the power transfer unit 20 has communicated through the Bluetooth module 29 corresponds to the receiver 10 to which the power transfer portion 24 has fed power, acquires the identification information through the Bluetooth module 29 also when restarting the power feeding from the power transfer portion 24 to the receiver 10, and performs control of continuing the power feeding from the power transfer portion 24 to the receiver 10 in the case where the identification information of the receiver 10 determined to correspond to the receiver 10 to which the power transfer portion 24 has fed power agrees with the identification information of the receiver acquired when the power feeding from the power transfer portion 24 is restarted and stopping the power feeding in the case where the identification information of the receiver 10 determined to correspond to the receiver 10 to which the power transfer portion 24 has fed power does not agree with the identification information of the receiver acquired when the power feeding from the power transfer portion 24 is restarted. Thus, the controller 30 can perform control of stopping the power feeding in the case where the receiver 10 determined to correspond to the receiver to which the power transfer portion 24 has fed power is replaced by another receiver on which the correspondence determination has not been performed after the correspondence determination and before the restart of the power feeding from the power transfer portion 24 to the receiver 10, so that the identification information of the receiver 10 determined to correspond to the receiver to which the power transfer portion 24 has fed power and the identification information of the receiver acquired when the power feeding from the power transfer portion 24 is restarted do not agree with each other. Therefore, power feeding to another receiver on which the correspondence determination has not been performed can be suppressed. Furthermore, in the case where the identification information of the receiver 10 determined to correspond to the receiver 10 to which the power transfer portion 24 has fed power agrees with the identification information of the receiver acquired when the power feeding from the power transfer portion 24 is restarted, the controller 30 performs control of continuing the power feeding from the power transfer potion 24 to the receiver 10, whereby power can be reliably properly fed to the receiver 10.

According to the first embodiment, as hereinabove described, the power transfer unit 20 further includes the display portion 26 that notifies the user of the state of power feeding, and the controller 30 performs control of notifying the user of the state of connection process for power feeding by the display portion 26 when changing the state of power feeding from the power feeding state to the non-power feeding state and performing the correspondence determination. Thus, the user can be notified of the connection process for power feeding when the controller 30 changes the state of power feeding from the power feeding state to the non-power feeding state and performs the correspondence determination, and hence the user can be reminded that the change to the non-power feeding state is a normal operation. Consequently, the user can be inhibited from having such a misunderstanding that power feeding is not started.

### (Second Embodiment)

A second embodiment is now described with reference to Figs. 1, 2, 4, 7, and 8. In this second embodiment, a controller 130 performs a correspondence determination also in the middle of power feeding from a power transfer unit 120 to a receiver 10 in addition to the structure of the aforementioned first embodiment in which the controller 30 performs the correspondence determination when the power feeding from the power transfer unit 20 to the receiver 10 is started.

A noncontact power transfer system 200 according to the second embodiment of the present invention includes the receiver 10 and the power transfer unit 120, as shown in Fig. 1. The power transfer unit 120 includes a Bluetooth module 129 and the controller 130. Portions having the same functions as those in the aforementioned first embodiment are denoted by the same reference numerals, to omit the description. The Bluetooth module 129 is an example of the "wireless communication portion" in the present invention.

According to the second embodiment, the power transfer unit 120 can wirelessly communicate with a plurality of receivers (receivers including the receiver 10) at a time through the Bluetooth module 129. The power transfer unit 120 can feed power to the plurality of receivers at a time.

In a power transfer unit communicating with a plurality of receivers and feeding power thereto such as this power transfer unit 120, a user may feed power to a new receiver different from a receiver 10 in the middle of power feeding to the receiver 10 determined to correspond to a receiver with which the power transfer unit has communicated after the correspondence determination is performed. In this case, a problem similar to that described in the aforementioned first embodiment may arise in the new receiver in the middle of the power feeding to the receiver 10. In other words, a receiver of a first noncontact power transfer system may communicate with a power transfer unit of a second noncontact power transfer system, and a receiver of the second noncontact power transfer system may communicate with a power transfer unit of the first noncontact power transfer system.

According to the second embodiment, not only when the power feeding is started but also when power is fed to a new receiver in the middle of the power feeding from a power transfer portion 24 to the receiver 10, the controller 130 of the power transfer unit 120 changes the state of power feeding from the power feeding state of feeding power from the power transfer portion 24 to the new receiver to the non-power feeding state of feeding no power from the power transfer portion 24 to the new receiver and determines whether or not a receiver with which the power transfer unit 120 has communicated through the Bluetooth module 129 corresponds to the new receiver to which the power transfer portion 24 has fed power.

Power feeding processing of the power transfer unit 120 including processing for performing the correspondence determination in the middle of the power feeding is now described on the basis of a flowchart with reference to Figs. 4, 7, and 8. The same processing as that in the aforementioned first embodiment shown in Figs. 4 and 5 is denoted by the same reference numerals, to omit the description.

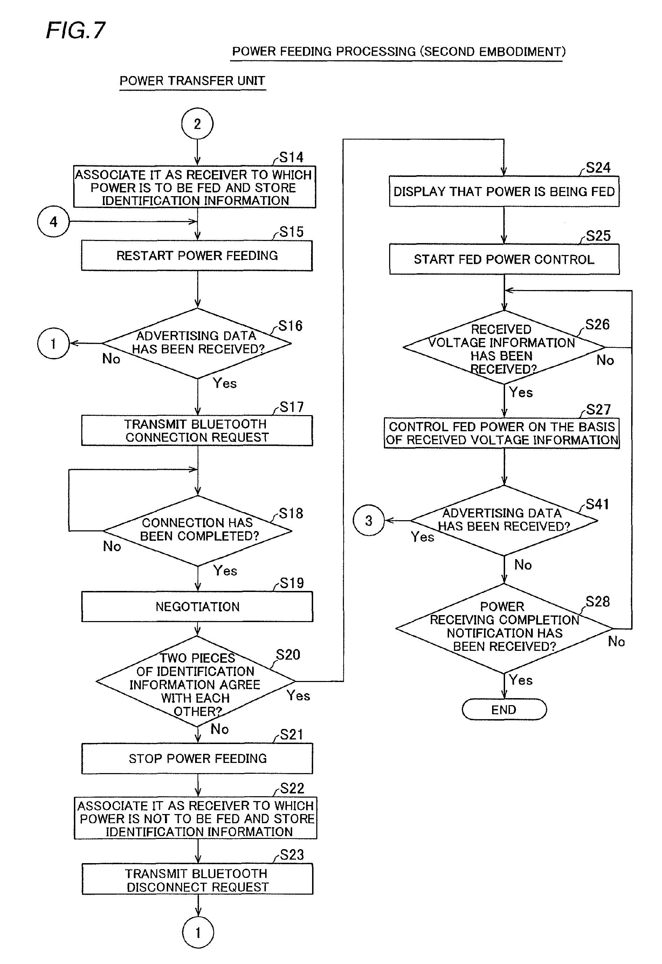

First, processing at steps S1 to S27 is performed, as shown in Figs. 4 and 7, and the controller 130 (see Fig. 1) performs control of feeding power from the power transfer portion 24 (see Fig. 1) to the receiver 10 (see Fig. 1), similarly to the aforementioned first embodiment. Then, the controller 130 performs control of determining whether or not advertising data has been received at a step S41 in the middle of the power feeding, as shown in Fig. 7. When determining that the advertising data has not been received, the controller 130 performs control of determining whether or not a power receiving completion notification has been received from the receiver 10 at a step S28.

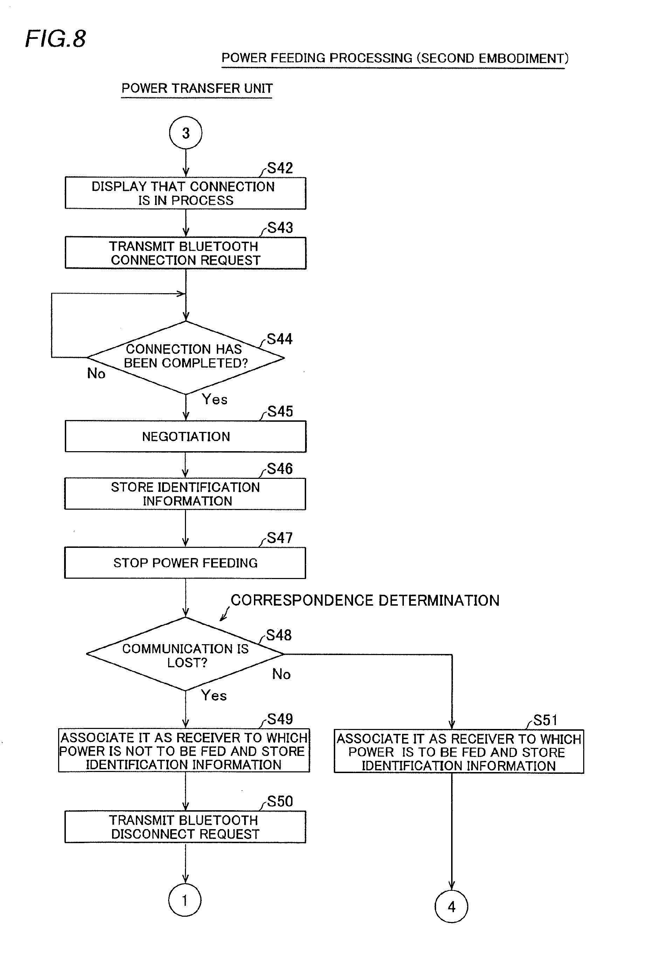

When the controller 130 determines that the advertising data has been received at the step S41, the new receiver has conceivably moved closer to receive power (to be charged), and hence the controller 130 performs control of displaying "indication in connection process" (see Fig. 2) on a display portion 26 (see Fig. 1) at a step S42, as shown in Fig. 8.

At a step S43, the controller 130 performs control of transmitting a connection request based on the Bluetooth standards to the new receiver. At a step S44, the controller 130 performs control of determining whether or not the connection with the new receiver has been completed. When determining that the connection with the new receiver has not been completed, the controller 130 repeats the processing at the step S44.

When determining that the connection with the new receiver has been completed at the step S44, the controller 130 performs control of making an exchange (negotiation) of information based on prescribed standards related to noncontact power feeding to the new receiver at a step S45. Furthermore, the controller 130 performs control of acquiring identification information (BD address) of the new receiver at the step S45. At a step S46, the controller 130 performs control of storing the identification information of the new receiver acquired during the negotiation in a ROM 27 (see Fig. 1). The ROM 27 also stores identification information (BD address) of the receiver 10.

At a step S47, the controller 130 performs control of stopping the power feeding from the power transfer portion 24 in order to determine whether or not the new receiver with which the power transfer unit 120 has newly started to communicate corresponds to the new receiver to which the power transfer portion 24 has newly started to feed power. In other words, according to the second embodiment, the controller 30 performs control of stopping power feeding at the prescribed timing (the timing at the step S10 and the step S47 in Fig. 4) from the restart of power feeding and specifying an electronic device to which power is to be fed a plurality of times.

At a step S48, the controller 130 performs the correspondence determination. Specifically, the controller 130 performs control of determining whether or not the communication (connection) with the new receiver is lost at the step S48. When the communication with the new receiver is not lost (continues), the power transfer unit 120 has conceivably communicated with a receiver different from the new receiver to which the power transfer portion 24 has newly started to feed power, and hence the controller 130 performs control of associating the receiver with which the power transfer unit 120 has communicated as the receiver to which power is not to be fed and storing the identification information in the ROM 27 at a step S49. At a step S50, the controller 130 performs control of transmitting a disconnect request of wireless communication based on the Bluetooth standards to the receiver with which the power transfer unit 120 has communicated and returns to the step S1.

When the controller 130 determines that the communication with the new receiver is lost at the step S48, the new receiver with which the power transfer unit 120 has newly started to communicate conceivably corresponds to the new receiver to which the power transfer portion 24 has newly started to feed power, and hence the controller 130 performs control of associating the new receiver with which the power transfer unit 120 has newly started to communicate as a new receiver to which power is to be fed and storing the identification information in the ROM 27 at a step S51. Then, the controller 130 advances to a step S15, as shown in Fig. 7.

At the step S15, the controller 130 performs control of restarting the power feeding from the power transfer portion 24 to the receiver 10 and the new receiver. Subsequent processing is similar to the processing according to the aforementioned first embodiment except for performing the processing on both the receiver 10 and the new receiver. In other words, the power transfer unit 120 is connected to the receiver 10 and the new receiver through the processing at the steps S16 to S19. Through processing at a step S20, the controller 130 determines whether or not the identification information of both the receiver 10 and the new receiver agrees with the stored identification information. When determining that the identification information of either the receiver 10 or the new receiver or both the receiver 10 and the new receiver does not agree with the stored identification information through the processing at the step S20, the controller 130 performs processing for stopping the power feeding to the receiver 10 and the new receiver and disconnecting the communication therewith through processing at steps S21 to S23. When determining that the identification information of both the receiver 10 and the new receiver agrees with the stored identification information, the controller 130 controls fed power on the basis of received voltage information of the receiver 10 and the new receiver through processing at steps S24 to S28.

The remaining structure of the power transfer system 200 according to the second embodiment is similar to that of the power transfer system 100 according to the aforementioned first embodiment.

According to the second embodiment, the following effects can be obtained.

According to the second embodiment, as hereinabove described, the power transfer unit 120 is provided with the controller 130 changing the state of power feeding from the power feeding state to the non-power feeding state and performing the correspondence determination, whereby even in the case where a first power transfer unit and a second power transfer unit are arranged in a range where wireless communication is enabled, power can be properly fed to the receiver 10 and the new receiver added in the middle of the power feeding to the receiver 10 on the basis of the result of the correspondence determination, similarly to the aforementioned first embodiment.

According to the second embodiment, as hereinabove described, the controller 130 is configured to change the state of power feeding from the power feeding state to the non-power feeding state and performs the correspondence determination not only when the power feeding from the power transfer portion 24 to the receiver 10 is started but also in the middle of the power feeding from the power transfer portion 24 to the receiver 10. Thus, the controller 130 performs the correspondence determination not only when the power feeding from the power transfer portion 24 to the receiver 10 is started but also in the middle of the power feeding from the power transfer portion 24 to the receiver 10, and hence the controller 13 can perform the correspondence determination on the new receiver when the new receiver different from the receiver 10 to which power is being fed is added in the middle of the power feeding in the case where power can be fed from the power transfer portion 24 to the plurality of receivers. Thus, power can be properly fed to both the receiver 10 and the new receiver.

The remaining effects of the second embodiment are similar to those of the aforementioned first embodiment.

### (Third Embodiment)

A third embodiment is now described with reference to Figs. 2 and 9 to 13. In this third embodiment, wireless communication is performed with a wireless LAN, unlike the aforementioned first and second embodiments in which wireless communication is performed with the Bluetooth.

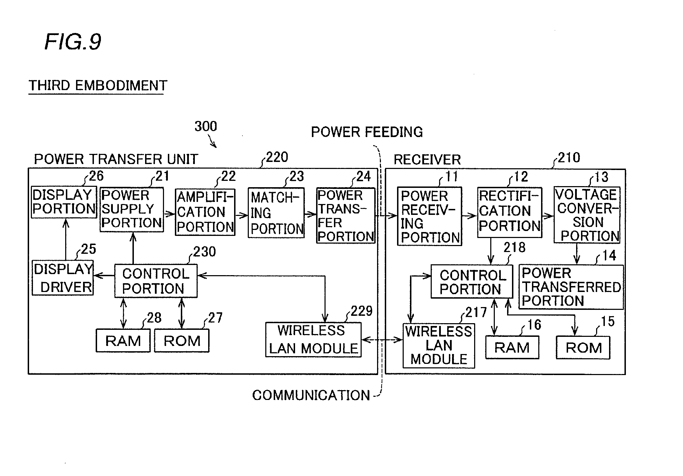

A noncontact power transfer system 300 according to the third embodiment of the present invention includes a receiver 210 and a power transfer unit 220, as shown in Fig. 9. In the noncontact power transfer system 300, the receiver 210 and the power transfer unit 220 communicate with (are connected to) each other by wireless communication based on the standards employed for the wireless LAN. Portions having the same functions as those in the aforementioned first and second embodiments are denoted by the same reference numerals, to omit the description. The receiver 210 is an example of the "external device" in the present invention.

The receiver 210 includes a wireless LAN module 217 and a controller 218. The wireless LAN module 217 can perform wireless communication on the basis of the standards employed in the wireless LAN such as the IEEE802.11 series. The receiver 210 wirelessly communicates with a power transfer unit (a power transfer unit including the power transfer unit 220) through the wireless LAN module 217. The wireless LAN module 217 has an MAC address as unique identification information. The MAC address is an example of the "identification information" in the present invention.

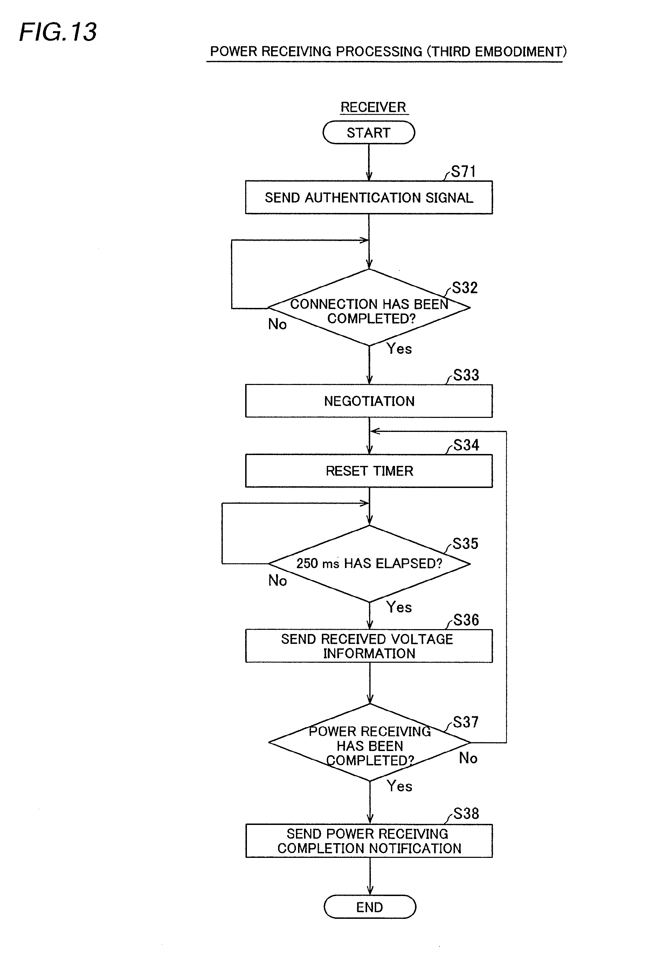

The controller 218 of the receiver 210 controls each component of the receiver 210. More specifically, the controller 218 controls each component to perform control related to power receiving processing (see Fig. 13) for receiving power from the power transfer unit 220. The controller 218 performs control of acquiring received voltage information from a rectification portion 12 and sending the acquired received voltage information to the power transfer unit 220 through the Bluetooth module 217.

The power transfer unit 220 includes a wireless LAN module 229 and a controller 230. The wireless LAN module 229 is an example of the "wireless communication portion" in the present invention.

The wireless LAN module 229 of the power transfer unit 220 can perform wireless communication on the basis of the standards employed for the wireless LAN such as the IEEE802.11 series. The power transfer unit 220 can wirelessly communicate with a receiver (a receiver including the receiver 210) through the wireless LAN module 229.

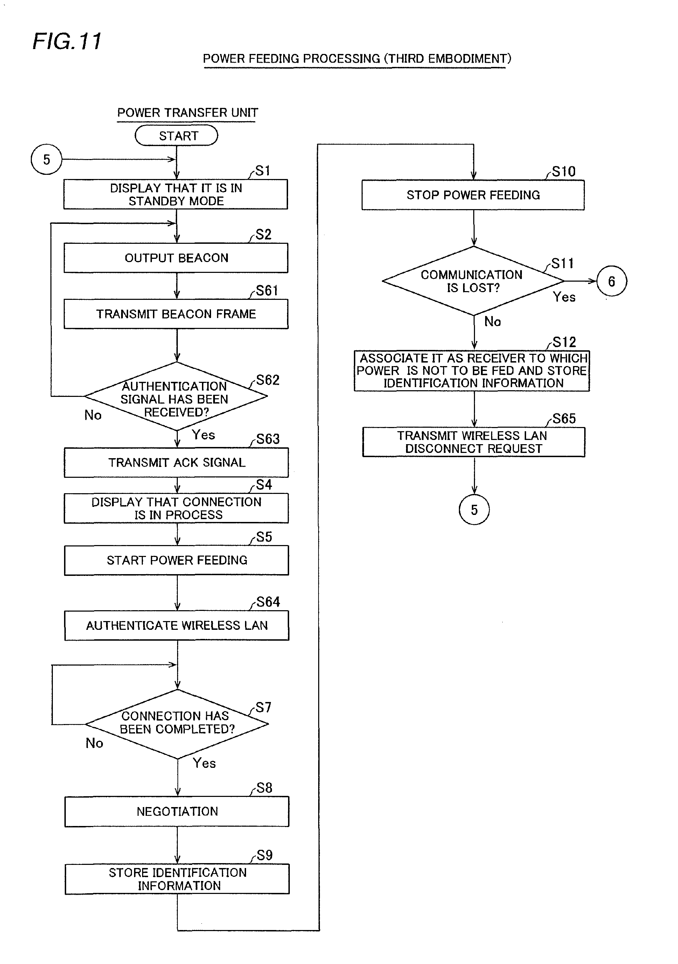

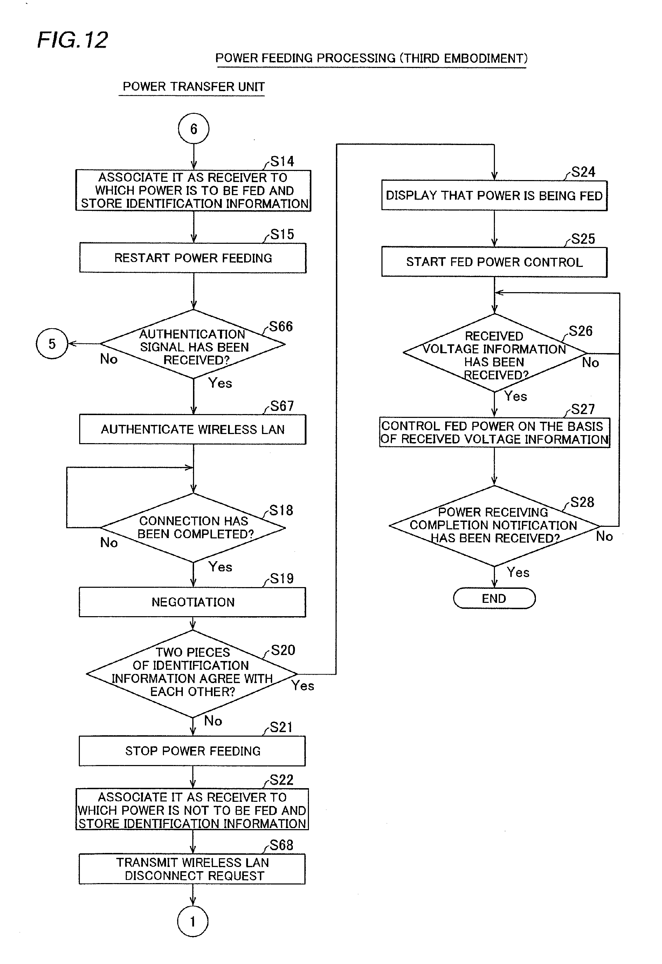

The controller 230 of the power transfer unit 220 controls each component of the power transfer unit 220. More specifically, the controller 230 controls each component to perform control related to power feeding processing (see Figs. 11 and 12) for feeding power to the receiver 210. The power receiving processing performed by the controller 218 of the receiver 210 and the power feeding processing performed by the controller 230 of the power transfer unit 220 are similar to those in the aforementioned first embodiment except for that a method for wireless communication is different. Therefore, the structure different from that according to the aforementioned first embodiment is mainly described below, and the description of the similar structure is properly omitted for simplification.

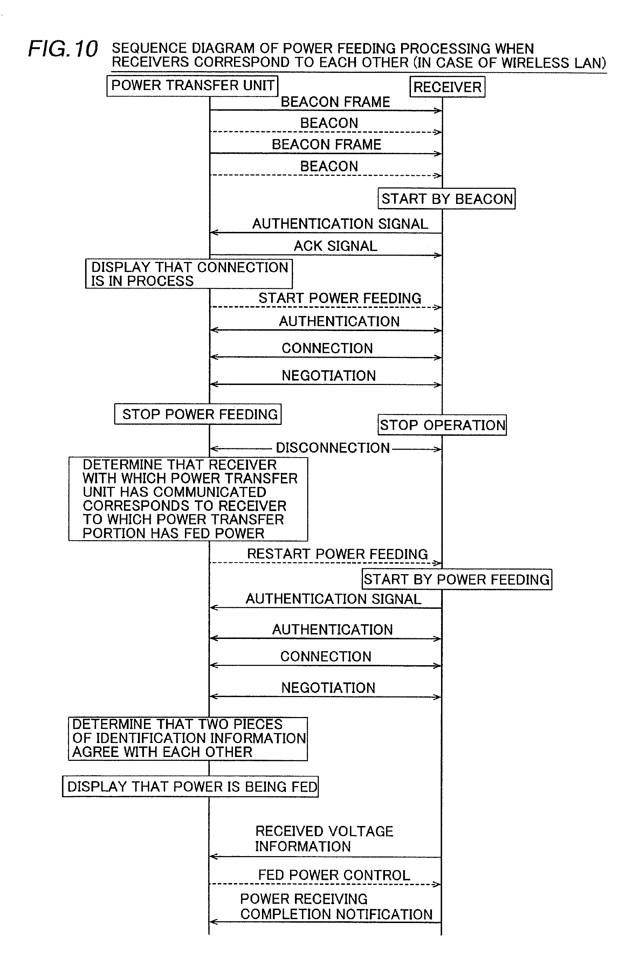

The control related to the power receiving processing of the receiver 210 and the control related to the power feeding processing of the power transfer unit 220 are now described with reference to Fig. 10.

The controller 230 (see Fig. 9) of the power transfer unit 220 (see Fig. 9) performs control of periodically outputting a beacon (power feeding for a short time) from a power transfer portion 24 (see Fig. 9) in a standby mode before feeding power to the receiver 210 (see Fig. 9) and periodically outputting a beacon frame from the wireless LAN module 229 (see Fig. 9), as shown in Fig. 10. The controller 230 performs control of displaying "indication in standby mode" (see Fig. 2) on a display portion 26 (see Fig. 9) in this standby mode.

The receiver 210 is started by power supply from a power transferred portion 14 to each component when power is fed to a power receiving portion 11 (see Fig. 9) by the beacon. The controller 218 (see Fig. 9) of the receiver 210 receives the beacon frame through the wireless LAN module 217 (see Fig. 9) when the receiver 210 is started by the beacon and sends an authentication signal to the power transfer unit 220 on the basis of the receiving of the beacon frame.

The controller 230 of the power transfer unit 220 performs control of transmitting an ACK signal to the receiver 210 and displaying "indication in connection process" on the display portion 26 when receiving the authentication signal. The controller 230 starts power feeding from the power transfer portion 24 to the receiver 210 and conducts mutual authentication (transmits and receives signals for authentication) with the receiver 210 through the wireless LAN module 229 (see Fig. 9) on the basis of the standards employed for the wireless LAN when receiving the authentication signal. Thus, the receiver 210 and the power transfer unit 220 are connected to each other on the basis of the standards employed for the wireless LAN through the wireless LAN module 217 and the wireless LAN module 229.

The controller 218 of the receiver 210 and the controller 230 of the power transfer unit 220 make an exchange (negotiation) of information based on prescribed standards related to noncontact power feeding such as the A4WP. The controller 230 of the power transfer unit 220 acquires the identification information (MAC address) of the wireless LAN module 217 of the receiver 210 during the negotiation.

Also according to the third embodiment, the controller 230 of the power transfer unit 220 determines whether or not a receiver with which the power transfer unit 220 has communicated through the wireless LAN module 229 corresponds to the receiver 210 to which the power transfer portion 24 has fed power by determining whether or not the communication (connection) with the receiver 210 is lost when changing the state of power feeding from the power feeding state of feeding power from the power transfer portion 24 to the receiver 210 to the non-power feeding state of feeding no power from the power transfer portion 24 to the receiver 210 after feeding power to the receiver 210 and being connected to the receiver 210.

When determining that the receiver with which the power transfer unit 220 has communicated through the wireless LAN module 229 corresponds to the receiver 210 to which the power transfer portion 24 has fed power, the controller 230 of the power transfer unit 220 performs control of restarting the power feeding from the power transfer portion 24 to the receiver 210. When determining that the receiver with which the power transfer unit 220 has communicated through the wireless LAN module 229 does not correspond to the receiver 210 to which the power transfer portion 24 has fed power, the controller 230 of the power transfer unit 220 performs control of not restarting the power feeding from the power transfer portion 24 to the receiver (the receiver different from the receiver 210).

The controller 230 of the power transfer unit 220 performs control of associating the identification information (MAC address) of the receiver 210 acquired during the negotiation with the result of the correspondence determination and storing the associated identification information in a ROM 27. Specifically, the controller 230 associates the receiver 210 with which the power transfer unit 220 has communicated as the receiver to which power is to be fed when determining that the receiver 210 with the power transfer unit 20 has communicated through the wireless LAN module 229 corresponds to the receiver 210 to which the power transfer portion 24 has fed power and associates the receiver 210 with which the power transfer unit 220 has communicated as a receiver to which power is not to be fed when determining that the receiver with the power transfer unit 220 has communicated through the wireless LAN module 229 does not correspond to the receiver 210 to which the power transfer portion 24 has fed power, and stores the identification information of the receiver 210 in the ROM 27.

In Fig. 10, the controller 230 of the power transfer unit 220 determines that the receiver 210 with the power transfer unit 220 has communicated through the wireless LAN module 229 corresponds to the receiver 210 to which the power transfer portion 24 has fed power, and hence the controller 230 of the power transfer unit 220 performs control of restarting the power feeding from the power transfer portion 24 to the receiver 210. Thus, the receiver 210 is restarted by power supply from the power transferred portion 14 to each component when power is fed from the power transfer portion 24 to the power receiving portion 11. Thereafter, the receiver 210 sends the authentication signal to the power transfer unit 220, and the power transfer unit 220 transmits the ACK signal to the receiver 210. The receiver 210 and the power transfer unit 220 are connected to each other through the wireless LAN module 217 and the wireless module LAN 229 on the basis of the standards employed for the wireless LAN and make a negotiation with each other.

The controller 230 of the power transfer unit 220 acquires the identification information (MAC address) of the receiver 210 through the wireless LAN module 229 during the negotiation also when the power feeding from the power transfer portion 24 to the receiver 210 is restarted.

The controller 230 of the power transfer unit 220 performs control of determining whether or not the identification information (MAC address) of the receiver 210 determined to correspond to the receiver 210 to which the power transfer portion 24 has fed power and the identification information (MAC address) of the receiver acquired during the negotiation when the power feeding from the power transfer portion 24 is restarted agree with each other. The controller 230 performs control of continuing the restarted power feeding from the power transfer portion 24 to the receiver 210 when determining that the two pieces of identification information agree with each other. When the controller 230 determines that the two pieces of identification information do not agree with each other, the receiver 210 has conceivably been replaced by another receiver on which the correspondence determination has not been performed, and hence the controller 230 performs control of stopping the restarted power feeding from the power transfer portion 24 to another receiver, associates the identification information of another receiver acquired during the negotiation when the power feeding from the power transfer portion 24 is restarted with the receiver to which power is not to be fed, and stores the identification information of another receiver in the ROM 27.

The controller 230 of the power transfer unit 220 performs control of displaying "indication during power feeding" (see Fig. 2) on the display portion 26 when the two pieces of identification information agree with each other, as shown in Fig. 10.

The controller 218 of the receiver 210 performs control of sending the received voltage information of the power receiving portion 11 to the power transfer unit 220 at the prescribed timing (every 250 ms (milliseconds)). The controller 218 performs control of sending a power receiving completion notification to the power transfer unit 220 when the power transferred portion 14 is fully charged.

The controller 230 of the power transfer unit 220 acquires the received voltage information of the receiver 210 through the wireless LAN module 229 and controls fed power on the basis of the acquired received voltage information. The controller 230 terminates the power feeding processing when receiving the power receiving completion notification from the receiver 210.

The power feeding processing of the power transfer unit 220 is now described on the basis of a flowchart with reference to Figs. 11 and 12. Then, the power receiving processing of the receiver 210 is described on the basis of a flowchart with reference to Fig. 13. The same processing as that in the aforementioned first embodiment shown in Figs. 4, 5, and 6 is denoted by the same reference numerals, to omit the description.

As shown in Fig. 11, the controller 230 (see Fig. 9) performs processing at steps S1 and S2 to perform control of periodically outputting the beacon (power feeding for a short time) from the power transfer portion 24 (see Fig. 9). At a step S61, the controller 230 performs control of periodically outputting the beacon frame from the wireless LAN module 229 (see Fig. 9) in parallel with the processing at the step S2.

At a step S62, the controller 230 determines whether or not the authentication signal has been received from the receiver 210 (see Fig. 9). When determining that the authentication signal has not been received, the controller 230 returns to the step S2 and repeats the output of the beacon and the beacon frame.

When the controller 230 determines that the authentication signal has been received at the step S62, the receiver 210 has conceivably moved closer to receive power (to be charged), and hence the controller 230 performs control of transmitting the ACK signal to the receiver 210 at a step S63. Then, the controller 230 performs processing at steps S4 and S5 to start the power feeding from the power transfer portion 24 to the receiver 210.

At a step S64, the controller 230 conducts the mutual authentication with the receiver 210 through the wireless LAN module 229 on the basis of the standards employed for the wireless LAN. Then, the controller 230 performs processing at steps S7 to S9, similarly to the aforementioned first embodiment.

At a step S10, the controller 230 performs control of stopping the power feeding from the power transfer portion 24 to the receiver 210 in order to determine whether or not the receiver with which the power transfer unit 220 has communicated corresponds to the receiver 210 to which the power transfer portion 24 has fed power.

At a step S11, the controller 230 determines whether or not the communication (connection) with receiver 210 is lost to perform the correspondence determination. When the communication with the receiver 210 is not lost (continues), the power transfer unit 220 has conceivably communicated with a receiver different from the receiver 210 to which the power transfer portion 24 has fed power, and hence the controller 230 performs control of associating the receiver with which the power transfer unit 220 has communicated as the receiver to which power is not to be fed and storing the identification information in the ROM 27 at a step S12. At a step S65, the controller 230 performs control of transmitting a disconnect request of wireless communication based on the standards employed for the wireless LAN to the receiver with which the power transfer unit 220 has communicated and returns to the step S1.

When the controller 230 determines that the communication with the receiver 210 is lost at the step S11, the receiver with which the power transfer unit 220 has communicated conceivably corresponds to the receiver 210 to which the power transfer portion 24 has fed power, and hence the controller 230 performs processing at steps S14 and S15, similarly to the aforementioned first embodiment, as shown in Fig. 12.

After restarting the power feeding, the controller 230 performs control of determining whether or not the authentication signal has been received again at a step S66. Specifically, the controller 230 performs control of determining whether or not the authentication signal has been received within a prescribed time period from the restart of the power feeding at the step S66. When the controller 230 determines that the authentication signal has not been received within the prescribed time period, a user has conceivably removed the receiver 210, and hence the controller 230 stops the power feeding from the power transfer portion 24 and returns to the step S1.

When determining that the authentication signal has been received within the prescribed time period at the step S66, the controller 230 conducts the mutual authentication with the receiver 210 through the wireless LAN module 229 on the basis of the standards employed for the wireless LAN again at a step S67. Then, the controller 230 performs processing at steps S18 to S20, similarly to the aforementioned first embodiment.

When the controller 230 determines that two pieces of identification information do not agree with each other at the step S20, the receiver 210 has conceivably been replaced by a receiver on which the correspondence determination has not been performed. Thus, after performing processing at steps S21 and S22, the controller 230 performs control of transmitting the disconnect request of wireless communication based on the standards employed for the wireless LAN to the receiver whose identification information has been acquired during the negotiation when the power feeding is restarted at a step S68 and returns to the step S1.

When the controller 230 determines that the two pieces of identification information correspond to each other at the step S20, the receiver 210 is conceivably a receiver on which the correspondence determination has been performed, and hence the controller 230 performs processing (processing for controlling fed power) at steps S24 to S28, similarly to the aforementioned first embodiment and terminates the power feeding processing.

The power receiving processing of the receiver 210 is now described on the basis of a flowchart with reference to Fig. 13.

As shown in Fig. 13, the controller 218 performs control of sending the authentication signal to the power transfer unit 220 at a step S71 when power is fed from the power transfer portion 24 of the power transfer unit 220. Then, the controller 218 performs processing at steps S32 to S38, similarly to the aforementioned first embodiment and terminates the power receiving processing.

The remaining structure of the power transfer system 300 according to the third embodiment is similar to that of the power transfer system 100 according to the aforementioned first embodiment.

According to the third embodiment, the following effects can be obtained.

According to the third embodiment, as hereinabove described, the power transfer unit 220 is provided with the controller 230 changing the state of power feeding from the power feeding state to the non-power feeding state and performing the correspondence determination, whereby even in the case where a first power transfer unit and a second power transfer unit are arranged in a range where wireless communication is enabled, power can be properly fed to the receiver 210 on the basis of the result of the correspondence determination, similarly to the aforementioned first embodiment.

According to the third embodiment, as hereinabove described, the power transfer unit 220 is configured to communicate with the receiver 210 through the wireless LAN module 229. Thus, the power transfer unit 220 communicates with the receiver 210 through the wireless LAN module 229, and hence the power transfer unit 220 can transmit and receive information at relatively high speed as compared with the case where the power transfer unit 220 communicates with the receiver 210 through a Bluetooth module.

The remaining effects of the third embodiment are similar to those of the aforementioned second embodiment.

### (Fourth Embodiment)

A fourth embodiment is now described with reference to Figs 1, 14, and 15. In this fourth embodiment, a controller 330 performs correspondence determination by determining whether or not advertising data has been received when changing the state of power feeding from the non-power feeding state to the power feeding state, unlike the aforementioned first embodiment in which the controller 30 performs the correspondence determination by determining whether or not the communication (connection) with the receiver 10 is lost when changing the state of power feeding from the power feeding state to the non-power feeding state. The advertising data is an example of the "initial information of wireless communication" in the present invention.

A non-contact power transfer system 400 according to the fourth embodiment of the present invention includes a receiver 10 and a power transfer unit 320, as shown in Fig. 1. The power transfer unit 320 includes the controller 330. Portions having the same functions as those in the aforementioned first embodiment are denoted by the same reference numerals, to omit the description.

The controller 330 of the power transfer unit 320 changes the state of power feeding from the power feeding state of feeding power from a power transfer portion 24 to the receiver 10 to the non-power feeding state of feeding no power from the power transfer portion 24 to the receiver 10 after feeding power to the receiver 10 and being connected to the receiver 10, similarly to the aforementioned first embodiment.

According to the fourth embodiment, the controller 330 further changes the state of power feeding from the non-power feeding state (the state of stopping power feeding from the power transfer portion 24) to the power feeding state (the state of restarting the power feeding from the power transfer portion 24) after changing the state of power feeding from the power feeding state to the non-power feeding state. The controller 330 determines whether or not a receiver with which the power transfer unit 320 has communicated through a Bluetooth module 29 corresponds to the receiver 10 to which the power transfer portion 24 has fed power by determining whether or not the advertising data has been received from the receiver 10 when changing the state of power feeding from the non-power feeding state to the power feeding state.

More specifically, according to the fourth embodiment, the controller 330 of the power transfer unit 320 performs control of determining that the receiver 10 with which the power transfer unit 320 has communicated through the Bluetooth module 29 corresponds to the receiver 10 to which the power transfer portion 24 has fed power when receiving the advertising data from the receiver 10 in the case where the controller 330 changes the state of power feeding from the non-power feeding state to the power feeding state. The controller 330 performs control of determining that the receiver with which the power transfer unit 320 has communicated through the Bluetooth module 29 does not correspond to the receiver 10 to which the power transfer portion 24 has fed power when not receiving the advertising data from the receiver 10 (when the power transfer unit 320 has communicated with the receiver different from the receiver 10) in the case where the controller 330 changes the state of power feeding from the non-power feeding state to the power feeding state.

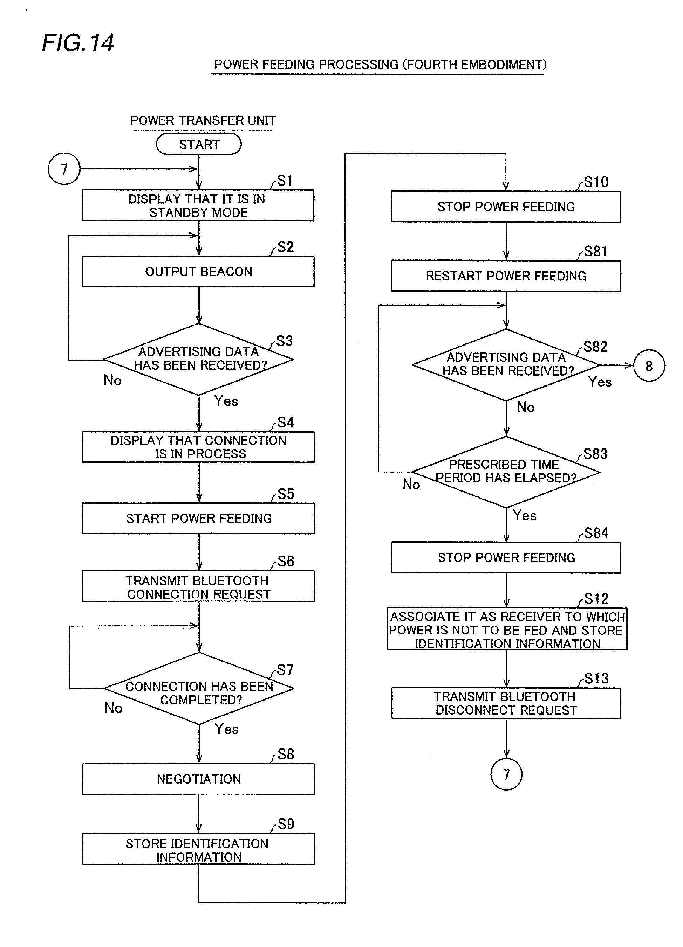

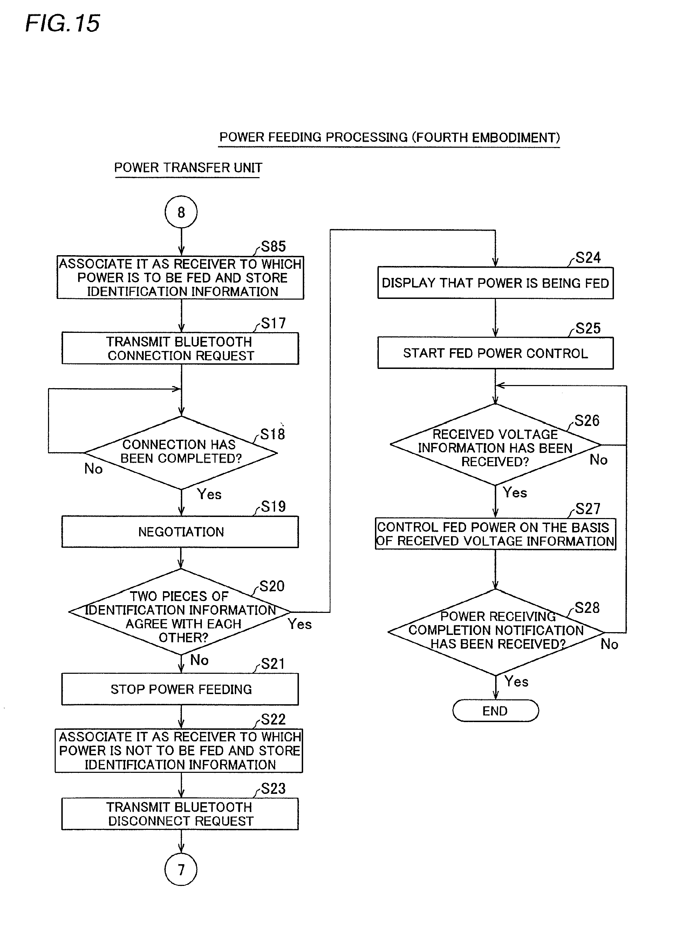

Control related to power feeding processing of the power transfer unit 320 is now described with reference to Figs. 14 and 15.

As shown in Fig. 14, the controller 330 (see Fig. 1) performs processing at steps S1 to S10 to perform control of changing the state of power feeding from the power feeding state to the non-power feeding state, similarly to the aforementioned first embodiment.

Then, the controller 330 performs control of restarting the power feeding from the power transfer portion 24 to the receiver 10 at a step S81. At a step S82, the controller 330 performs control of determining whether or not the advertising data has been received. When determining that the advertising data has not been received, the controller 330 advances to a step S83.

At the step S83, the controller 330 performs control of determining whether or not a prescribed time period has elapsed. As the prescribed time period, a time period obtained by measuring a time period from the output of a latest beacon (at the step S2) to the reception of the advertising data (at the step S3) and substantially doubling the measured time period can be employed, for example.

When determining that the prescribed time period has not elapsed at the step S83, the controller 330 returns to the step S82 and determines whether or not the advertising data has been received again. When determining that the prescribed time period has elapsed, on the other hand, the controller 330 advances to a step S84 and performs control of stopping the power feeding from the power transfer portion 24 to the receiver 10. More specifically, the controller 330 performs control of not restarting the power feeding (stopping the restarted power feeding) to the receiver that has not sent the advertising data. In other words, the controller 330 performs control of stopping the restarted power feeding in the case where the receiver with which the power transfer unit 320 has wirelessly communicated through the Bluetooth module 29 is different from the receiver 10 to which the power transfer portion 24 has restarted to feed power when the power transfer portion 24 has restarted the power feeding. Thereafter, the controller 330 performs processing at steps S12 and S13 and returns to the step S1, similarly to the aforementioned first embodiment.

When the controller 330 determines that the advertising data has been received at the step S82, the receiver the receiver with which the power transfer unit 320 has communicated conceivably corresponds to the receiver 10 to which the power transfer portion 24 has fed power, and hence the controller 330 advances to a step S85. As shown in Fig. 15, the controller 330 performs control of associating the receiver with which the power transfer unit 320 has communicated as a receiver to which power is to be fed and storing identification information (the identification information of the receiver 10) in a ROM 27 at a step S85. In other words, the controller 330 performs control of identifying the receiver 10 that has sent the advertising data as the receiver 10 to which power is to be fed and restarting the power feeding (continuing the restarted power feeding). Thereafter, the controller 330 performs processing at steps S17 to S28 and terminates the power feeding processing, similarly to the aforementioned first embodiment.

The remaining structure of the power transfer system 400 according to the fourth embodiment is similar to that of the power transfer system 100 according to the aforementioned first embodiment.

According to the fourth embodiment, the following effects can be obtained.

According to the fourth embodiment, as hereinabove described, the power transfer unit 320 is provided with the controller 330 changing the state of power feeding from the non-power feeding state to the power feeding state and performing the correspondence determination, whereby even in the case where a first power transfer unit and a second power transfer unit are arranged in a range where wireless communication is enabled, power can be properly fed to the receiver 10 on the basis of the result of the correspondence determination, similarly to the aforementioned first embodiment.

The remaining effects of the fourth embodiment are similar to those of the aforementioned first embodiment.

### (Fifth Embodiment)

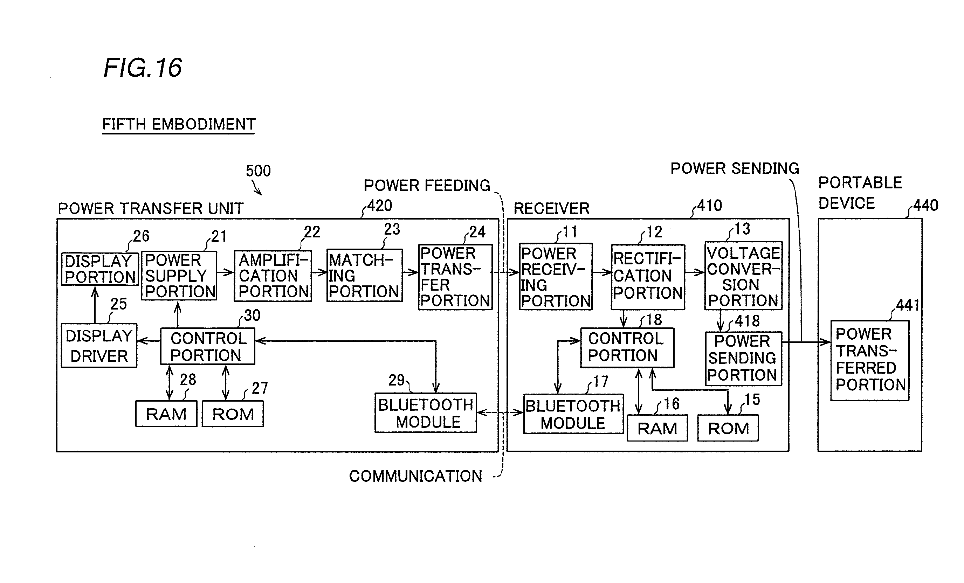

A fifth embodiment is now described with reference to Fig. 16. In this fifth embodiment, a receiver 410 capable of sending power to a portable device 440 including a power transferred portion 441 is employed as a receiver, unlike the aforementioned first embodiment in which the receiver 10 including the power transferred portion 14 is employed as the receiver. The receiver 410 is an example of the "external device" in the present invention.

A noncontact power transfer system 500 according to the fifth embodiment of the present invention includes the receiver 410, a power transfer unit 420, and the portable device 440, as shown in Fig. 16. The receiver 410 can send power to the portable device 440. This receiver 410 includes a cover type receiver attached to be capable of sending power to the portable device 440, for example. Portions having the same functions as those in the aforementioned first embodiment are denoted by the same reference numerals, to omit the description.

According to the fifth embodiment, the receiver 410 is provided with no power transferred portion including a secondary battery. On the other hand, the portable device 440 is provided with the power transferred portion 441 including a secondary battery. The receiver 410 and the portable device 440 are connected to each other by an unshown connection terminal to be capable of sending power.

The receiver 410 includes a power receiving portion 11, a rectification portion 12, a voltage conversion portion 13, a ROM 15, a RAM 16, a Bluetooth module 17, and a controller 18, similarly to the receiver 10 according to the aforementioned first embodiment. According to the fifth embodiment, the receiver 410 does not include a power transferred portion but further includes a power sending portion 418. The power sending portion 418 sends power to the power transferred portion 441 of the portable device 440 through the unshown connection terminal when the power receiving portion 11 receives power. Consequently, the power transferred portion 441 including the secondary battery is charged. A controller 30 of the power transfer unit 420 performs power feeding processing shown in Figs. 4 and 5.

According to the fifth embodiment, the following effects can be obtained.

According to the fifth embodiment, as hereinabove described, the power transfer unit 420 is provided with the controller 30 changing the state of power feeding from the power feeding state to the non-power feeding state and performing correspondence determination, whereby even in the case where a first power transfer unit and a second power transfer unit are arranged in a range where wireless communication is enabled, power can be properly fed to the receiver 410 on the basis of the result of the correspondence determination, similarly to the aforementioned first embodiment. Furthermore, according to the fifth embodiment, power can be properly fed also to the portable device 440 through the receiver 410.

The remaining effects of the fifth embodiment are similar to those of the aforementioned first embodiment.

The embodiments disclosed this time must be considered as illustrative in all points and not restrictive. The range of the present invention is shown not by the above description of the embodiments but by the scope of claims for patent, and all modifications within the meaning and range equivalent to the scope of claims for patent are further included.

For example, while power is fed from the power transfer unit 20 (120, 220, 320, 420) to the receiver 10 (210, 410) in a noncontact manner by the magnetic field resonance method in each of the aforementioned first to fifth embodiments, the present invention is not restricted to this. According to the present invention, power may alternatively be fed from the power transfer unit to the receiver in a noncontact manner by a method other than the magnetic field resonance method. For example, power may be fed from the power transfer unit to the receiver in a noncontact manner by a method such as an electric field coupling method, an electromagnetic induction method, or a radiowave method.

While the Bluetooth is employed as a wireless communication method in each of the aforementioned first, second, fourth, and fifth embodiments and the wireless LAN is employed as a wireless communication method in the third embodiment, the present invention is not restricted to this. According to the present invention, a wireless communication method other than the Bluetooth and the wireless LAN may alternatively be employed. For example, a wireless communication method such as specified low power radio or feeble radio may be employed.

While the controller 30 (130, 230, 330) is configured to perform control of continuing the restarted power feeding from the power transfer portion 24 to the receiver 10 (210, 410) when determining that the identification information of the receiver 10 (210, 410) determined to correspond to the receiver 10 (201, 410) which the power transfer portion 24 has fed power and the identification information of the receiver 10 (210, 410) acquired during the negotiation when the power feeding from the power transfer portion 24 is restarted agree with each other in each of the aforementioned first to fifth embodiments, the present invention is not restricted to this. According to the present invention, the controller may alternatively be configured to perform control of continuing the restarted power feeding from the power transfer portion to the receiver regardless of whether or not the two pieces of identification information agree with each other.

While the state of power feeding is displayed on the display portion 26 to notify the user of the state of power feeding in each of the aforementioned first to fifth embodiments, the present invention is not restricted to this. According to the present invention, the user may alternatively be notified of the state of power feeding by a method other than displaying on the display portion. For example, the user may be notified of the state of power feeding by a method such as audio notification from an audio output portion or lighting of a light source portion such as an LED according to the state of power feeding. In this case, the audio output portion or the light source portion is an example of the "notification portion" in the present invention.

While the identification information is stored in the ROM 27 in each of the aforementioned first to fifth embodiments, the present invention is not restricted to this. According to the present invention, the identification information may alternatively be stored in a storage portion other than the ROM 27. For example, the identification information may be stored in a storage portion such as a RAM or a hard disk. In this case, the RAM or the hard disk is an example of the "identification information acquisition portion" in the present invention.

While the controller 130 is configured to perform the correspondence determination not only when the power feeding from the power transfer unit 120 to the receiver 10 is started but also in the middle of the power feeding from the power transfer unit 120 to the receiver 10 in the aforementioned second embodiment, the present invention is not restricted to this. According to the present invention, the controller may alternatively be configured to perform the correspondence determination only in the middle of the power feeding from the power transfer unit to the receiver.

While the controller 230 is configured to perform the correspondence determination when starting the power feeding from the power transfer unit 220 to the receiver 210, employing the wireless LAN as a wireless communication method in the aforementioned third embodiment, the present invention is not restricted to this. According to the present invention, the controller may alternatively be configured to perform the correspondence determination not only when the power feeding from the power transfer unit to the receiver is started but also in the middle of the power feeding from the power transfer unit to the receiver in the case where the wireless LAN is employed as a wireless communication method, similarly to the aforementioned second embodiment in which the Bluetooth is employed as a wireless communication method.

While the processing operations performed by the controller 18 (218) of the receiver 10 (210, 410) and the controller 30 (130, 230, 330) of the power transfer unit 20 (120, 220, 320, 420) are described, using the flowcharts described in a flow-driven manner in which processing is performed in order along a processing flow for the convenience of illustration in each of the aforementioned first to fifth embodiments, the present invention is not restricted to this. According to the present invention, the processing operations performed by the controller 18 (218) and the controller 30 (130, 230, 330) may alternatively be performed in an event-driven manner in which processing is performed on an event basis. In this case, the processing operations performed by the controllers may be performed in a complete event-driven manner or in a combination of an event-driven manner and a flow-driven manner.

While the Bluetooth is employed as a wireless communication method and the advertising data is employed as the initial information of wireless communication in the aforementioned fourth embodiment, the present invention is not restricted to this. According to the present invention, information for having the receiver recognized, sent immediately after the start-up in order to request a wireless connection according to each wireless communication method may alternatively be employed as the initial information of wireless communication when a wireless communication method such as ZigBee (registered trademark) or the wireless LAN is employed.

## Claims

1. A power transfer unit (20, 120, 220, 320, 420) comprising:
a power source (24);
a wireless communication portion (29, 129, 229); and
a controller (30, 130, 230, 330) specifying an external device to which power is to be transferred, based on a state of the wireless communication portion according to change in a state of power transfer from the power source.

2. The power transfer unit according to claim 1, wherein
the change in the state of power transfer is change from a state of transferring power from the power source to a state of stopping power transfer from the power source.

3. The power transfer unit according to claim 2, wherein
the controller identifies the external device that has lost wireless communication as the external device to which power is to be transferred and restarts power transfer.

4. The power transfer unit according to claim 2 or 3, wherein
the controller does not restart power transfer to the external device that has not lost wireless communication.

5. The power transfer unit according to claim 3 or 4, wherein
the controller does not restart power transfer in a case where the external device with which the power transfer unit has wirelessly communicated through the wireless communication portion is different from the external device to which the power source has stopped transferring power when the power source has stopped power transfer.

6. The power transfer unit according to any of claims 1 to 5, further comprising an identification information acquisition portion (27) acquiring identification information of the external device with which the power transfer unit wirelessly communicates through the wireless communication portion, wherein
the controller specifies the external device to which power is to be transferred, based on the identification information.

7. The power transfer unit according to claim 6, wherein
the controller continues power transfer in a case where the identification information of the external device acquired when power transfer from the power source is restarted and the identification information of the external device to which power is to be transferred that has been specified agree with each other and stops power transfer in a case where the same do not agree with each other.

8. The power transfer unit according to any of claims 1 to 7, wherein
the controller stops power transfer within a prescribed time period from start of power transfer to the external device.

9. The power transfer unit according to any of claims 1 to 8, wherein
the controller stops power transfer at prescribed timing from restart of power transfer and specifies the external device to which power is to be transferred a plurality of times.

10. The power transfer unit according to any of claims 1 to 9, further comprising a notification portion (26) notifying a user of information indicating a control process of the controller.

11. The power transfer unit according to claim 1, wherein
the change in the state of power transfer is change from a state of stopping power transfer from the power source to a state of restarting power transfer from the power source.

12. The power transfer unit according to claim 11, wherein
the controller identifies the external device that has sent initial information of wireless communication as the external device to which power is to be transferred and restarts power transfer.

13. The power transfer unit according to claim 11 or 12, wherein
the controller does not restart power transfer to the external device that has not sent initial information of wireless communication.

14. The power transfer unit according to any of claims 1 to 13, wherein
the external device includes an external device comprising a power receiving portion (11) receiving power from the power source and a power sending portion (418) sending the power received by the power receiving portion to another external device.

15. A power transfer method comprising steps of:
transferring power from a power source (24) to an external device (10, 210, 410);
wirelessly communicating with the external device through a wireless communication portion (29, 129, 229); and
specifying the external device to which power is to be transferred by a controller (30, 130, 230, 330), based on a state of the wireless communication portion according to change in a state of power transfer from the power source.
